# EUROPEAN PATENT APPLICATION

(11) **EP 4 776 190 A1**
(43) Date of publication of application: **15.07.2026**
(21) Application number: 24881064.0
(22) Date of filing: 21.06.2024
(51) Int. Cl.: G06N 20/00

(54) **MODEL TRAINING METHOD, MODEL TRAINING APPARATUS, AND ELECTRONIC APPARATUS**

(30) Priority: 25.10.2023 CN 202311392819
(71) Applicant: HUAWEI TECHNOLOGIES CO., LTD., Shenzhen 518129 (CN)
(72) Inventor: ZHANG, Sha, Shenzhen, Guangdong 518129 (CN); LU, Lina, Shenzhen, Guangdong 518129 (CN); XIE, Yingtai, Shenzhen, Guangdong 518129 (CN)
(74) Representative: MERH-IP Matias Erny Reichl Hoffmann Patentanwälte PartG mbB
(86) International application number: PCT/CN2024/100624
(87) International publication number: WO 2025/086687

(57) **Abstract**

Embodiments of this application provide a model training method, a model training apparatus, and an electronic apparatus. The method is applied to an electronic device loaded with a parallel computing framework and a heterogeneous computing device, and includes: The parallel computing framework divides a model training task into a plurality of computing tasks; the parallel computing framework distributes the plurality of computing tasks to a plurality of virtual devices, where the plurality of virtual devices are virtual devices created based on the heterogeneous computing device; and the plurality of virtual devices execute the distributed computing tasks, to perform iterative computing of model training. According to the method in embodiments of this application, parallel execution logic of computing tasks is placed in a virtual device that can reuse a computing resource, and a binding relationship between a computing task, a communication task, and hardware is decoupled, so that an effect in which a plurality of processes are parallel and communication and computing are parallel can be implemented.

## Description

This application claims priority to Chinese Patent Application No. 2023113928192, filed with the China National Intellectual Property Administration on October 25, 2023 and entitled "MODEL TRAINING METHOD, MODEL TRAINING APPARATUS, AND ELECTRONIC APPARATUS", which is incorporated herein by reference in its entirety.

### TECHNICAL FIELD

This application relates to the field of computer technologies, and in particular, to a model training method, a model training apparatus, and an electronic apparatus.

### BACKGROUND

Deep learning is an artificial intelligence (Artificial Intelligence, AI) method used to teach computers to process data in a way inspired by a human brain. A deep learning model can recognize a complex pattern in an image, a text, sound, and other data to generate an accurate insight and prediction. A user can use the deep learning method to automatically execute a task that typically requires artificial intelligence, like description of an image or transcription of a sound file into a text.

In a deep learning application scenario, model training requires large computing power. However, based on an existing communication solution, communication overheads in a model training process are very high, a serious waste of idle computing power resources exists, and resource utilization of deep learning model training is not high.

Therefore, a model training method for deep learning model training is required, to reduce communication overheads in a deep learning model training process, reduce idle computing power resources, and improve resource utilization of deep learning model training.

### SUMMARY

For a problem of how to reduce communication overheads in a deep learning model training process, reduce idle computing power resources, and improve resource utilization of deep learning model training, this application provides a model training method, a model training apparatus, and an electronic apparatus. This application further provides a computer-readable storage medium and a server cluster.

The following technical solutions are used in embodiments of this application.

According to a first aspect, this application provides a model training method, where the method is applied to an electronic device loaded with a parallel computing framework and a heterogeneous computing device, and the method includes:

The parallel computing framework divides a model training task into a plurality of computing tasks;
the parallel computing framework distributes the plurality of computing tasks to a plurality of virtual devices, where the plurality of virtual devices are in a one-to-one correspondence with the plurality of computing tasks, and the plurality of virtual devices are virtual devices created based on the heterogeneous computing device; and
the plurality of virtual devices execute the distributed computing tasks, to perform iterative computing for model training.

According to the method in the first aspect, parallel execution logic of computing tasks is placed in a virtual device that can reuse a computing resource, and a binding relationship between a computing task, a communication task, and hardware (the heterogeneous computing device) is decoupled, so that an effect in which a plurality of processes are parallel and communication and computing are parallel can be implemented macroscopically, and communication completion time is completely hidden theoretically.

Further, because the parallel execution logic of the computing tasks is placed in the virtual device that can reuse the computing resource, during iterative computing of model training, the computing task and the communication task do not need to depend on a hardware topology relationship of the heterogeneous computing device, but depend on a topology relationship of a virtual device in a computing task execution device set. Therefore, when a computation-communication ratio is maximized, a hardware topology of the heterogeneous computing device does not need to be learned in detail, so that implementation difficulty of maximizing the computation-communication ratio is reduced.

Further, according to the method in the first aspect, task distribution for the plurality of virtual devices is implemented by using the parallel computing framework used to perform task distribution for a plurality of heterogeneous computing devices. Because the virtual device is presented as a heterogeneous computing device in the parallel computing framework, the parallel computing framework used to perform task distribution for a plurality of heterogeneous computing devices does not need to be adjusted, so that implementation difficulty of task distribution for the virtual device is reduced.

In an implementation of the first aspect, the method further includes:
a communication virtualization apparatus is deployed on the electronic device, the communication virtualization apparatus is configured to present the plurality of virtual devices to the parallel computing framework in a form of the plurality of heterogeneous computing devices, and the communication virtualization apparatus is deployed outside the parallel computing framework.

According to the foregoing implementation, the communication virtualization apparatus is deployed outside the parallel computing framework, and communication between the parallel computing framework and the virtual device is implemented through the communication virtualization apparatus. The parallel computing framework does not need to sense an implementation status of deployment of the virtual device on the heterogeneous computing device, so that implementation difficulty of communication between the parallel computing framework and the virtual device is reduced.

In an implementation of the first aspect,
communication between the parallel computing framework and the plurality of virtual devices and between the plurality of virtual devices is implemented based on collective communication; and
the communication virtualization apparatus is further configured to: configure a collective communication attribute resource for the virtual device, present a collective communication attribute of the virtual device to the parallel computing framework, and perform virtualization support on a collective communication physical resource.

In an implementation of the first aspect, the method further includes:
the routing apparatus is deployed outside the parallel computing framework, and the routing apparatus is configured to generate, based on virtual device topology relationships of the plurality of virtual devices, a collective communication operator for collective communication.

According to the foregoing implementation, the parallel computing framework is not responsible for managing a device topology and inter-device communication, but transfers a collective communication capability to the virtual device. In an iterative computing process, the collective communication is implemented without participation of the parallel computing framework, so that flexibility and communication efficiency of the collective communication are improved.

In an implementation of the first aspect, the routing apparatus is configured to store a virtual device routing table, and the virtual device routing table is used to record all virtual devices that need to perform data copying in a current computing task and a topology connection relationship.

In an implementation of the first aspect, the routing apparatus is deployed on the electronic device, and the routing apparatus includes instance objects that are in a one-to-one correspondence with the plurality of the virtual devices.

In an implementation of the first aspect, the routing apparatus is deployed in each virtual device.

In an implementation of the first aspect, the plurality of computing tasks include at least a first computing task and a second computing task. That the parallel computing framework distributes the plurality of computing tasks to the plurality of virtual devices includes: distributing the first computing task to a first virtual device, and distributing the second computing task to a second virtual device.

That the virtual devices execute the distributed computing tasks, to perform iterative computing for model training includes:
executing, by the first virtual device, the first computing task, and executing, by the second virtual device, the second computing task;
when task migration from the first virtual device to a third virtual device is triggered, terminating execution, by the first virtual device, of the first computing task, and keeping the second virtual device executing the second computing task, where
executing the task migration includes synchronizing the first computing task in the first virtual device and a current execution status of the first computing task to the third virtual device; and
continuing, by the third virtual device, to execute the first computing task.

In an implementation of the first aspect, that the virtual devices execute the distributed computing tasks, to perform iterative computing for model training further includes:
after the task migration, updating the virtual device topology relationships in the routing apparatus based on the task migration.

In an implementation of the first aspect, that the virtual devices execute the distributed computing tasks, to perform iterative computing for model training further includes:
after the task migration, skipping feeding back, to the parallel computing framework, information indicating that the virtual device topology relationship changes.

According to the foregoing implementation, the parallel computing framework is not responsible for managing the device topology and the inter-device communication, but transfers the collective communication capability to the virtual device, supports dynamic migration of the computing task in the iterative computing process, and dynamically updates link information of the virtual device. A computing framework layer does not need to recompile and generate a communication operator after sensing, so that a waste of computing power waiting is reduced.

In an implementation of the first aspect, the plurality of computing tasks further include at least a third computing task, and execution of the third computing task needs to reference a computing result of the first computing task.

That the parallel computing framework distributes the plurality of computing tasks to the plurality of virtual devices further includes: distributing the third computing task to a fourth virtual device.

That the plurality of virtual devices execute the distributed computing tasks, to perform iterative computing for model training includes: The fourth virtual device subscribes to a task execution status of the first virtual device based on the third computing task; and after the first virtual device completes execution of the first computing task, the fourth virtual device obtains the computing result of the first computing task, and executes the third computing task based on the computing result of the first computing task.

According to the foregoing implementation, the virtual device senses a real-time status of each computing task, and may initiate a communication task in real time after computing of a single computing task is completed. When the parallel computing framework uniformly manages statuses of all computing tasks, after a single computing task is completed, the computing task needs to wait for the computing framework to deliver a communication task to implement communication. Compared with that, the method in this embodiment of this application can reduce computing power consumption.

In an implementation of the first aspect, that the virtual devices execute the distributed computing tasks, to perform iterative computing for model training further includes:
after the task migration, updating the fourth virtual device to subscribe to a task execution status of the third virtual device.

In an implementation of the first aspect,
executing the task migration further includes synchronizing a virtual device topology relationship in a routing apparatus of the first virtual device to a routing apparatus of the third virtual device; and
after the task migration, updating the virtual device topology relationships in the routing apparatus based on the task migration includes:
   updating a virtual device topology relationship in the routing apparatus of the third virtual device, and updating a virtual device topology relationship in a routing apparatus of the fourth virtual device.

According to a second aspect, this application provides a model training apparatus, where the apparatus includes a parallel computing framework and a plurality of virtual devices.

The plurality of virtual devices are virtual devices created based on a heterogeneous computing device.

The parallel computing framework is loaded on an electronic device, and the parallel computing framework is configured to: divide a model training task into a plurality of computing tasks, and distribute the plurality of computing tasks to the plurality of virtual devices, where the plurality of computing tasks are in a one-to-one correspondence with the plurality of virtual devices.

The plurality of virtual devices are configured to execute the distributed computing tasks, to perform iterative computing for model training.

In an implementation of the second aspect, the apparatus further includes a communication virtualization apparatus, where
the communication virtualization apparatus is deployed on the electronic device, and the communication virtualization apparatus is deployed outside the parallel computing framework; and
the communication virtualization apparatus is configured to present the plurality of virtual devices to the parallel computing framework in a form of a plurality of heterogeneous computing devices.

In an implementation of the second aspect, communication between the parallel computing framework and the virtual devices and between the different virtual devices is collective communication.

The communication virtualization apparatus includes:
a collective communication resource virtualization module, configured to configure a collective communication attribute resource for the virtual device, and present a collective communication attribute of the virtual device to the parallel computing framework; and
a virtual device overcommitment module, configured to perform virtualization support on a collective communication physical resource.

In an implementation of the second aspect, the apparatus further includes a routing apparatus.

The routing apparatus is deployed outside the parallel computing framework, and is configured to generate, based on virtual device topology relationships of the plurality of virtual devices, a collective communication operator for collective communication.

In an implementation of the second aspect, the routing apparatus is configured to store a virtual device routing table, and the virtual device routing table is used to record all virtual devices that need to perform data copying in a current computing task and a topology connection relationship.

In an implementation of the second aspect, the routing apparatus is deployed on the electronic device, and the routing apparatus includes instance objects that are in a one-to-one correspondence with the plurality of the virtual devices.

In an implementation of the second aspect, the routing apparatus is deployed in each virtual device.

In an implementation of the second aspect, the plurality of computing tasks include at least a first computing task and a second computing task; the plurality of virtual devices include at least a first virtual device and a second virtual device; the parallel computing framework distributes the first computing task to the first virtual device, and distributes the second computing task to the second virtual device; and the first virtual device executes the first computing task, and the second virtual device executes the second computing task.

The apparatus further includes a task migration module and a third virtual device, where
the task migration module is configured to: when task migration from the first virtual device to the third virtual device is triggered, terminate execution, by the first virtual device, of the first computing task, and keep the second virtual device executing the second computing task, where executing the task migration includes synchronizing the first computing task in the first virtual device and a current execution status of the first computing task to the third virtual device; and
the third virtual device is configured to continue to execute the first computing task after the task migration.

In an implementation of the second aspect, the routing apparatus is further configured to: after the task migration, update the virtual device topology relationships in the routing apparatus based on the task migration.

In an implementation of the second aspect, the routing apparatus is further configured to: after the task migration, skip feeding back, to the parallel computing framework, information indicating that the virtual device topology relationship changes.

In an implementation of the second aspect, the plurality of computing tasks further include at least a third computing task, execution of the third computing task needs to reference a computing result of the first computing task, and the plurality of virtual devices further include at least a fourth virtual device.

The parallel computing framework is configured to distribute the third computing task to the fourth virtual device.

The fourth virtual device is configured to: subscribe to a task execution status of the first virtual device based on the third computing task; after the first virtual device completes execution of the first computing task, obtain, by the fourth virtual device, the computing result of the first computing task; and execute the third computing task based on the computing result of the first computing task.

In an implementation of the second aspect, the fourth virtual device is further configured to:
after the task migration, update subscription to the task execution status of the first virtual device to subscription to a task execution status of the third virtual device.

In an implementation of the second aspect,
the task migration module is configured to synchronize a virtual device topology relationship in a routing apparatus of the first virtual device to a routing apparatus of the third virtual device.

The routing apparatus of the third virtual device is configured to: after the task migration, update a virtual device topology relationship in the routing apparatus of the third virtual device based on the task migration.

A routing apparatus of the fourth virtual device is configured to: after the task migration, update a virtual device topology relationship in the routing apparatus of the fourth virtual device based on the task migration.

According to a third aspect, this application provides an electronic apparatus, where the electronic apparatus includes a memory configured to store computer program instructions and a processor configured to execute the computer program instructions, and when the computer program instructions are executed by the processor, the electronic apparatus is triggered to perform the method steps according to the first aspect.

In an implementation of the third aspect, the electronic apparatus is the electronic device according to the first aspect. The electronic apparatus is configured to load a parallel computing framework, and the parallel computing framework loaded by the electronic apparatus is configured to perform the method steps performed by the parallel computing framework in the methods described in embodiments of this application.

Specifically, when the computer program instructions in the memory of the electronic apparatus are executed by the processor of the electronic apparatus, the electronic apparatus is triggered to perform the method steps performed by the electronic device in the first aspect.

In an implementation of the third aspect, the electronic apparatus is the heterogeneous computing device according to the first aspect. The electronic apparatus is configured to create a virtual device, and the virtual device created in the electronic apparatus is configured to perform the method steps performed by the virtual device in the first aspect.

Specifically, when the computer program instructions in the memory of the electronic apparatus are executed by the processor of the electronic apparatus, the electronic apparatus is triggered to perform the method steps performed by the heterogeneous computing device in the first aspect.

According to a fourth aspect, this application provides a computer-readable storage medium. The computer-readable storage medium stores a computer program, and when the computer program is run on a computer, the computer is enabled to perform the method according to the first aspect.

According to a fifth aspect, this application provides a server cluster, where the electronic device includes a memory configured to store computer program instructions and a processor configured to execute the computer program instructions, and when the computer program instructions are executed by the processor, the electronic device is triggered to perform the method steps according to the first aspect.

In an implementation of the fifth aspect, the server cluster includes the electronic device and the heterogeneous computing device according to the first aspect.

### BRIEF DESCRIPTION OF DRAWINGS

FIG. 1 is a diagram of an architecture of a hardware device for implementing model training according to an embodiment of this application;
FIG. 2 is a diagram of an architecture of a hardware device for implementing model training according to an embodiment of this application;
FIG. 3 is a diagram of a model training procedure according to an embodiment of this application;
FIG. 4 is a diagram of an architecture of a hardware device for implementing model training according to an embodiment of this application;
FIG. 5 is a diagram of an architecture of a hardware device for implementing model training according to an embodiment of this application;
FIG. 6 is a diagram of a model training procedure according to an embodiment of this application;
FIG. 7 is a diagram of a part of a model training procedure according to an embodiment of this application;
FIG. 8 is a diagram of a structure of a virtual device according to an embodiment of this application;
FIG. 9 is a diagram of a part of a model training procedure according to an embodiment of this application;
FIG. 10 is a diagram of an architecture of a hardware device for implementing model training according to an embodiment of this application;
FIG. 11 is a diagram of virtual devices according to an embodiment of this application;
FIG. 12A to FIG. 12C are a diagram of a computing task migration procedure according to an embodiment of this application;
FIG. 13A to FIG. 13C are a diagram of a computing task migration procedure according to an embodiment of this application;
FIG. 14 is a diagram of an architecture of a hardware device for implementing model training according to an embodiment of this application;
FIG. 15 is a diagram of an architecture of a hardware device for implementing model training according to an embodiment of this application; and
FIG. 16 is a diagram of a structure of an electronic apparatus according to an embodiment of this application.

### DESCRIPTION OF EMBODIMENTS

To make the objectives, technical solutions, and advantages of this application clearer, the following clearly and completely describes the technical solutions in this application with reference to specific embodiments and accompanying drawings in this application. It is clear that the described embodiments are merely some but not all of embodiments of this application. All other embodiments obtained by a person of ordinary skill in the art based on embodiments of this application without creative efforts shall fall within the protection scope of this application.

Terms used in implementations of this application are merely used to explain specific embodiments of this application, but are not intended to limit this application.

Deep learning model training is a feasible training solution that divides data and models according to a parallelism strategy and distributes computing tasks to a heterogeneous cluster with a plurality of machines and a plurality of cards for iterative training.

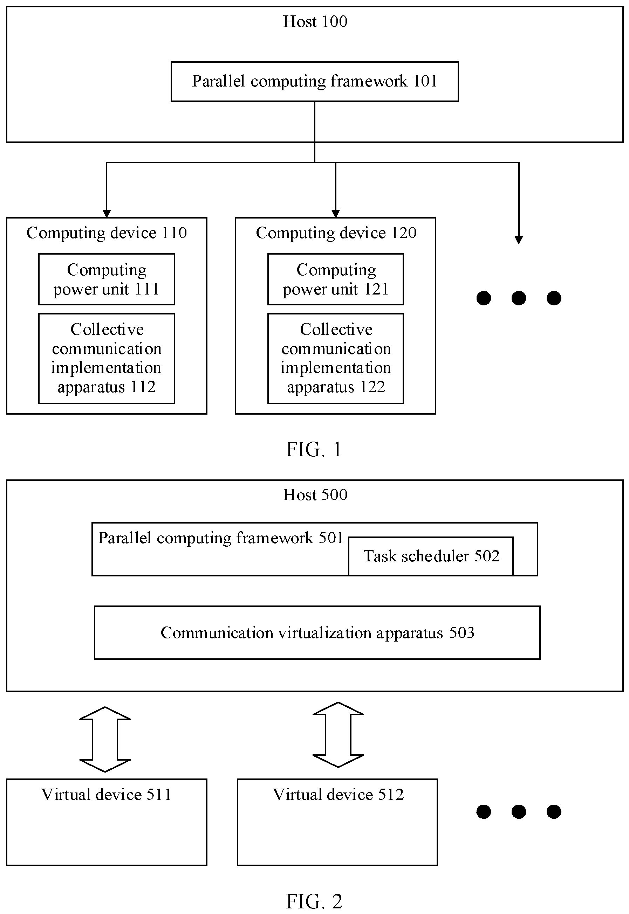

FIG. 1 is a diagram of an architecture of a hardware device for implementing model training according to an embodiment of this application.

The hardware device for implementing model training includes an electronic device 100 and a plurality of heterogeneous computing devices, and the plurality of heterogeneous computing devices include at least a heterogeneous computing device 110 and a heterogeneous computing device 120. In another embodiment, the plurality of heterogeneous computing devices may include more than two heterogeneous computing devices.

In this embodiment of this application, the electronic device is a device configured to manage a model training procedure. A type of the electronic device is not specially limited in this embodiment of this application. For example, the electronic device may be a local device (for example, a personal desktop computer), or may be a server device (for example, a local server or a cloud server).

The heterogeneous computing device is a physical device configured to execute a computing task, and is configured to: receive the computing task, perform computing on the computing task, and output a computing result. A type of the heterogeneous computing device is not specially limited in this embodiment of this application. For example, the heterogeneous computing device may be a computing card, for example, a graphics processing unit (Graphics Processing Unit, GPU) card or a neural network processing unit (Neural Network Processing Unit, NPU). The heterogeneous computing device may be another type of computing device, for example, an embedded microcomputer or a micro computing terminal.

For example, the heterogeneous computing device may be an electronic device independent of the electronic device. For example, the heterogeneous computing device is a computing card mounted on a terminal device, and the terminal device interacts with the electronic device through a data network. Alternatively, the heterogeneous computing device may be an electronic device mounted on the electronic device. For example, the electronic device is a host, and the heterogeneous computing device is a computing card mounted on the host. The heterogeneous computing device includes a computing power unit, and the computing power unit is configured to execute a computing task. For example, as shown in FIG. 1, the heterogeneous computing device 110 includes a computing power unit 111, and the heterogeneous computing device 120 includes a computing power unit 121.

Communication between the electronic device and the plurality of heterogeneous computing devices, and communication between the plurality of heterogeneous computing devices may be implemented based on a protocol like a PCIe link or an NVLINK. In some embodiments, the communication may alternatively be implemented through another link or another protocol. This is not specifically limited in this embodiment of this application.

As shown in FIG. 1, before starting model training, the electronic device 100 obtains a training script, a sample dataset, and a collective communication topology table (RankTable). The training script includes a to-be-trained original model. A RankTable file is used to describe topology information of a cluster device participating in collective communication, including a server (Server), a device (Device), network information, and the like.

The electronic device 100 is loaded with a parallel computing framework 101. The training script, the sample dataset, and the collective communication topology table are input into the parallel computing framework 101, and the parallel computing framework 101 starts a computing task (a model training task).

The parallel computing framework 101 includes a task scheduler, and the task scheduler divides the computing task for model training according to a specified parallelism strategy (specified by a user or based on a default configuration). In another embodiment, the computing task may alternatively be divided based on a third-party task scheduler independent of the electronic device 100 and according to a specified parallelism strategy.

Computing tasks obtained through division are distributed to different heterogeneous computing devices. The heterogeneous computing device executes a computing task by using the computing power unit 111, to perform one iterative computing. Iterative computing is repeated for a plurality of times until the computing task (model training task) ends.

One iterative computing includes forward propagation and backward update.

Specifically, forward propagation is a process of computing, from an input layer to an output layer in a neural network in sequence, an output based on an input of each neuron and according to a corresponding rule, and finally obtaining a loss (loss) function under a current parameter. Backward update is a process of computing, based on a forward propagation algorithm, a gradient (Gradients) of the loss function for each parameter from the output layer to the input layer of the neural network in sequence, and updating a related parameter under a given learning rate.

In one iterative computing, the heterogeneous computing device performs the following procedure.

Forward propagation:
(a) the heterogeneous computing device performs forward computing of a local error value (computing procedure); and
(b) local error values generated by all heterogeneous computing devices through computing are integrated according to a specific rule to generate a global error value (communication procedure).

Backward update:
(c) the model computes error information of each layer from back to front (computing procedure); and
(d) after all error information is synchronized, model parameter update is performed from front to back (communication procedure).

In the foregoing model training process, because the computing task is divided for the plurality of heterogeneous computing devices, a communication procedure, for example, a procedure b and a procedure d, is introduced in a single computing iteration.

Data communication is implemented between the plurality of heterogeneous computing devices based on collective communication. A concept of collective communication is first proposed by an information transfer framework (message passing interface, MPI). The MPI defines a standard message transfer interface to solve a global communication problem in a process group composed of different processes during parallel computing.

Specifically, a collective communication implementation apparatus is configured in the heterogeneous computing device. For example, the heterogeneous computing device 110 includes a collective communication implementation apparatus 112, and the heterogeneous computing device 120 includes a collective communication implementation apparatus 122. The parallel computing framework 101 generates, based on a device topology relationship of the heterogeneous computing device, a collective communication operator for collective communication. The collective communication implementation apparatus implements collective communication between different heterogeneous computing devices and between the heterogeneous computing device and the electronic device based on the collective communication operator.

In a model training process, a computing procedure and a communication procedure performed by the heterogeneous computing device are determined by a computing task received by the heterogeneous computing device and a network topology between the heterogeneous computing devices. In other words, after the computing task is distributed, the computing procedure and the communication procedure are bound to the heterogeneous computing device. In addition, based on the network topology, execution of the computing procedure and the communication procedure has a sequence (execution of a computing procedure or a communication procedure may need to wait for an execution result of another computing procedure or communication procedure). As a result, the computing procedure and the communication procedure cannot be effectively pipelined in parallel. When the computing procedure and the communication procedure cannot be effectively pipelined in parallel, idle computing power resources are wasted in a training process, and consequently effective computing power of the entire model training is low. For example, based on a measured value in a training process of PCL-L, in an operator-level model parallelism scenario, communication overheads that cannot be hidden are as high as 40%.

In view of the foregoing problems, an embodiment of this application provides a model training method. In a model training process, a plurality of virtual devices are constructed based on a heterogeneous computing device, and the plurality of virtual devices are used to process computing tasks obtained through division in parallel, to implement parallel model training.

FIG. 2 is a diagram of an architecture of a hardware device for implementing model training according to an embodiment of this application.

As shown in FIG. 2, the hardware device for implementing model training includes an electronic device 500 and a plurality of virtual devices created based on a heterogeneous computing device. As shown in FIG. 2, the plurality of virtual devices include at least a virtual device 511 and a virtual device 512. In another embodiment, the plurality of virtual devices may include more than two virtual devices.

A parallel computing framework 501 is loaded on the electronic device 500, and the parallel computing framework 501 includes a task scheduler 502.

The parallel computing framework 501 is configured to: divide a model training task into a plurality of computing tasks, and distribute the plurality of computing tasks obtained through division to the plurality of virtual devices (for example, to the virtual device 511 and the virtual device 512), to use the plurality of virtual devices to process the model training task in parallel.

In the embodiment shown in FIG. 2, each of the plurality of virtual devices is presented as one heterogeneous computing device in the parallel computing framework 501. In other words, the plurality of virtual devices are presented as a plurality of heterogeneous computing devices in the parallel computing framework 501.

It should be noted herein that, that the plurality of virtual devices are presented as the plurality of heterogeneous computing devices in the parallel computing framework 501 means that the parallel computing framework 501 perceives the plurality of virtual devices as the plurality of heterogeneous computing devices from a perspective of perception by the parallel computing framework 501, but the plurality of heterogeneous computing devices do not exist in practical.

Because the plurality of virtual devices are presented as the plurality of heterogeneous computing devices in the parallel computing framework 501, when the parallel computing framework 501 distributes the plurality of computing tasks obtained through division to the plurality of virtual devices, for the parallel computing framework 501, functions performed by the parallel computing framework 501 may be considered as: distributing the plurality of computing tasks obtained through division to the plurality of heterogeneous computing devices. Therefore, the parallel computing framework 501 may be implemented with reference to the parallel computing framework 101 shown in FIG. 1.

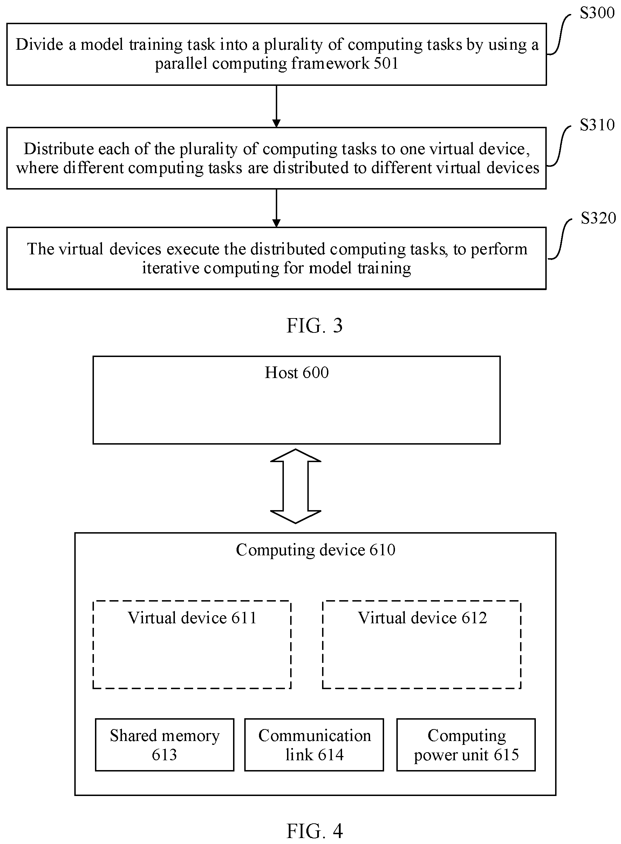

FIG. 3 is a diagram of a model training procedure according to an embodiment of this application.

In an embodiment, the following procedure shown in FIG. 3 is performed to implement parallel model training.

S300: The parallel computing framework 501 divides a model training task into a plurality of computing tasks, for example, divides the model training task into a first computing task and a second computing task.

S310: The parallel computing framework 501 distributes the plurality of computing tasks obtained through division to a plurality of virtual devices, where the plurality of virtual devices are in a one-to-one correspondence with the plurality of computing tasks, that is, each of the plurality of computing tasks is distributed to one virtual device, and different computing tasks are distributed to different virtual devices.

For example, the first computing task is distributed to the virtual device 511, and the second computing task is distributed to the virtual device 512.

S320: The plurality of virtual devices execute the distributed computing tasks, to perform iterative computing for model training.

For example, the virtual device 511 executes the first computing task, and the virtual device 512 executes the second computing task.

According to the method in this embodiment of this application, because parallel execution logic of computing tasks is placed in a virtual device that can reuse a computing resource, a binding relationship between a computing task, a communication task, and hardware (the heterogeneous computing device) is decoupled, so that an effect in which a plurality of processes are parallel and communication and computing are parallel can be implemented macroscopically, and communication completion time is completely hidden theoretically.

Further, because the parallel execution logic of the computing tasks is placed in the virtual device that can reuse the computing resource, during iterative computing of model training, the computing task and the communication task do not need to depend on a hardware topology relationship of the heterogeneous computing device, but depend on a topology relationship of a virtual device in a computing task execution device set. Therefore, when a computation-communication ratio is maximized, a hardware topology of the heterogeneous computing device does not need to be learned in detail, so that implementation difficulty of maximizing the computation-communication ratio is reduced.

Further, according to the method in this embodiment of this application, task distribution for the plurality of virtual devices is implemented by using the parallel computing framework used to perform task distribution for a plurality of heterogeneous computing devices. Because the virtual device is presented as a heterogeneous computing device in the parallel computing framework, the parallel computing framework used to perform task distribution for a plurality of heterogeneous computing devices does not need to be adjusted, so that implementation difficulty of task distribution for the virtual device is reduced.

In the embodiment shown in FIG. 2, the virtual device is a virtual device created based on the heterogeneous computing device, and the plurality of virtual devices may be virtual devices created based on a single heterogeneous computing device, or may be virtual devices created based on the plurality of heterogeneous computing devices.

For example, FIG. 4 is a diagram of an architecture of a hardware device for implementing model training according to an embodiment of this application.

As shown in FIG. 4, the hardware device for implementing model training includes an electronic device 600 and a heterogeneous computing device 610.

For the electronic device 600, refer to the electronic device 100. For the heterogeneous computing device 610, refer to the heterogeneous computing device 110 or the heterogeneous computing device 120.

A virtual device 611 and a virtual device 612 are created based on the heterogeneous computing device 610.

A hardware resource of the heterogeneous computing device 610 includes a shared memory 613, a communication link 614, and a computing power unit 615.

The shared memory 613 may be all memory resources of the heterogeneous computing device 610, or may be some memory resources of the heterogeneous computing device 610. Data synchronization may be performed between the virtual device 611 and the virtual device 612 based on the shared memory 613.

The communication link 614 is a data transmission link that may be provided in the heterogeneous computing device 610 for the virtual device to use, for example, a PCIe link or a network device link.

The computing power unit 615 is a computing resource of the heterogeneous computing device 610. The virtual device 611 and the virtual device 612 may share the computing power unit 615, for example, may reuse the computing power unit 615 in a time division manner.

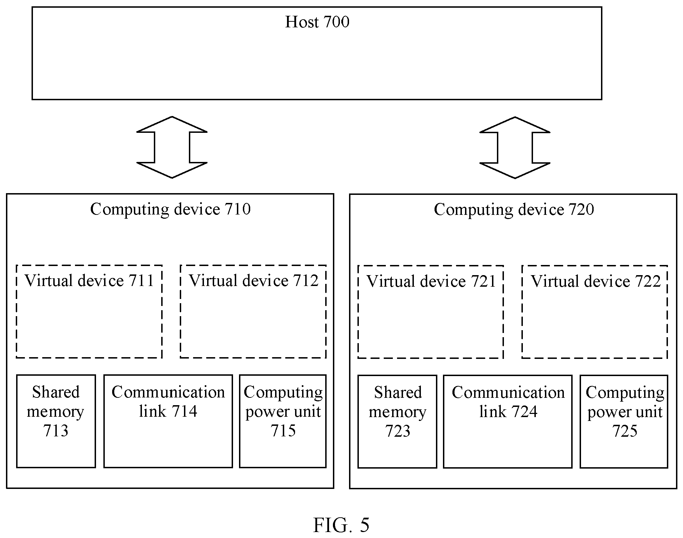

For another example, FIG. 5 is a diagram of an architecture of a hardware device for implementing model training according to an embodiment of this application.

As shown in FIG. 5, the hardware device for implementing model training includes an electronic device 700, a heterogeneous computing device 710, and a heterogeneous computing device 720.

For the electronic device 700, refer to the electronic device 100. For the heterogeneous computing device 710 and the heterogeneous computing device 720, refer to the heterogeneous computing device 110 or the heterogeneous computing device 120.

The heterogeneous computing device 710 and the heterogeneous computing device 720 may be heterogeneous computing devices of a same electronic device. For example, both the heterogeneous computing device 710 and the heterogeneous computing device 720 are mounted on the electronic device 700. For another example, both the heterogeneous computing device 710 and the heterogeneous computing device 720 are mounted on another electronic device other than the electronic device 700, and the electronic device on which the heterogeneous computing device 710 and the heterogeneous computing device 720 are mounted may communicate and interact with the electronic device 700.

The heterogeneous computing device 710 and the heterogeneous computing device 720 may be heterogeneous computing devices of different electronic devices. For example, the heterogeneous computing device 710 is mounted on the electronic device 700, the heterogeneous computing device 720 is mounted on another electronic device other than the electronic device 700, and the electronic device on which the heterogeneous computing device 720 is mounted may communicate and interact with the electronic device 700. For another example, the heterogeneous computing device 710 and the heterogeneous computing device 720 are respectively mounted on two electronic devices other than the electronic device 700, and the two electronic devices on which the heterogeneous computing device 710 and the heterogeneous computing device 720 are mounted may communicate and interact with the electronic device 700.

A virtual device 711 and a virtual device 712 are created based on the heterogeneous computing device 710, and a virtual device 721 and a virtual device 722 are created based on the heterogeneous computing device 720.

A hardware resource of the heterogeneous computing device 710 includes a shared memory 713, a communication link 714, and a computing power unit 715.

The shared memory 713 may be all memory resources of the heterogeneous computing device 710, or may be some memory resources of the heterogeneous computing device 710. Data synchronization may be performed between the virtual device 711 and the virtual device 712 based on the shared memory 713.

The communication link 714 is a data transmission link that may be provided in the heterogeneous computing device 710 for the virtual device to use, for example, a PCIe link or a network device link.

The computing power unit 715 is a computing resource of the heterogeneous computing device 710. The virtual device 711 and the virtual device 712 may share the computing power unit 715, for example, may reuse the computing power unit 717 in a time division manner.

A hardware resource of the heterogeneous computing device 720 includes a shared memory 723, a communication link 724, and a computing power unit 725.

The shared memory 723 may be all memory resources of the heterogeneous computing device 720, or may be some memory resources of the heterogeneous computing device 720.

The communication link 724 is a data transmission link that may be provided in the heterogeneous computing device 720 for the virtual device to use, for example, a PCIe link or a network device link.

The computing power unit 725 is a computing resource of the heterogeneous computing device 720. The virtual device 721 and the virtual device 722 may share the computing power unit 725, for example, may reuse the computing power unit 725 in a time division manner.

Further, to enable the parallel computing framework 501 to distribute parallel computing tasks to virtual devices, a communication virtualization apparatus 503 is further deployed in the electronic device 500.

The communication virtualization apparatus 503 is deployed outside the parallel computing framework 501. The communication virtualization apparatus 503 is configured to present a plurality of virtual devices to the parallel computing framework 501 in a form of a plurality of heterogeneous computing devices, so that the parallel computing framework 501 can distribute a computing task to the virtual devices in a manner of communication with the heterogeneous computing devices, and does not need to perform communication setting on the virtual devices.

A person skilled in the art may construct the communication virtualization apparatus 503 based on an attribute of the virtual device. A specific implementation of the communication virtualization apparatus 503 is not specifically limited in this application.

According to the method in this embodiment of this application, the communication virtualization apparatus is deployed outside the parallel computing framework, and communication between the parallel computing framework and the virtual device is implemented through the communication virtualization apparatus. The parallel computing framework does not need to sense an implementation status of deployment of the virtual device on the heterogeneous computing device, so that implementation difficulty of communication between the parallel computing framework and the virtual device is reduced.

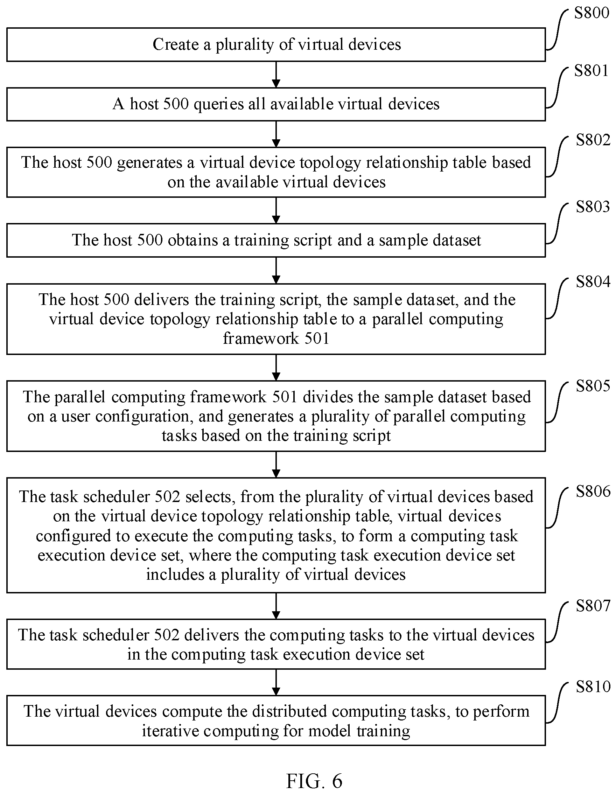

FIG. 6 is a diagram of a model training procedure according to an embodiment of this application.

S800: Create a plurality of virtual devices, where the plurality of virtual devices include at least the virtual device 511 and the virtual device 512.

S801: The electronic device 500 queries all available virtual devices.

S802: The electronic device 500 generates a virtual device topology relationship table based on the available virtual devices.

S803: The electronic device 500 obtains a training script and a sample dataset.

S804: The electronic device 500 delivers the training script, the sample dataset, and the virtual device topology relationship table to the parallel computing framework 501.

S805: The parallel computing framework 501 divides the sample dataset based on a user configuration, and generates a plurality of parallel computing tasks based on the training script.

S806: The task scheduler 502 selects, from the plurality of virtual devices based on the virtual device topology relationship table, virtual devices configured to execute the computing tasks, to form a computing task execution device set, where the computing task execution device set includes a plurality of virtual devices (including at least the virtual device 511 and the virtual device 512).

According to the method in this embodiment of this application, the virtual device is created before the training task is divided, and the virtual devices configured to execute the computing tasks are selected from the plurality of virtual devices based on the computing task obtained through division, to reduce time consumed for computing task distribution while ensuring flexibility of computing task distribution.

S807: The task scheduler 502 delivers the computing tasks to the virtual devices (including at least the virtual device 511 and the virtual device 512) in the computing task execution device set.

Communication between the parallel computing framework 501 and the virtual device is implemented through the communication virtualization apparatus 502.

S810: The virtual devices (including at least the virtual device 511 and the virtual device 512) compute the distributed computing tasks, to perform iterative computing of model training.

Further, in a process in which the plurality of virtual devices perform iterative computing, there may be a communication requirement between the virtual devices.

For example, in an embodiment, there is an undertaking relationship between the computing tasks. A computing result of another computing task needs to be introduced for execution of a computing task. For example, the parallel computing framework 501 divides the model training task into a plurality of computing tasks. The plurality of computing tasks include at least a computing task A and a computing task B. A computing result of the computing task A needs to be introduced for execution of the computing task B. The parallel computing framework 501 distributes the computing task A and the computing task B to the virtual device 511 and the virtual device 512 respectively.

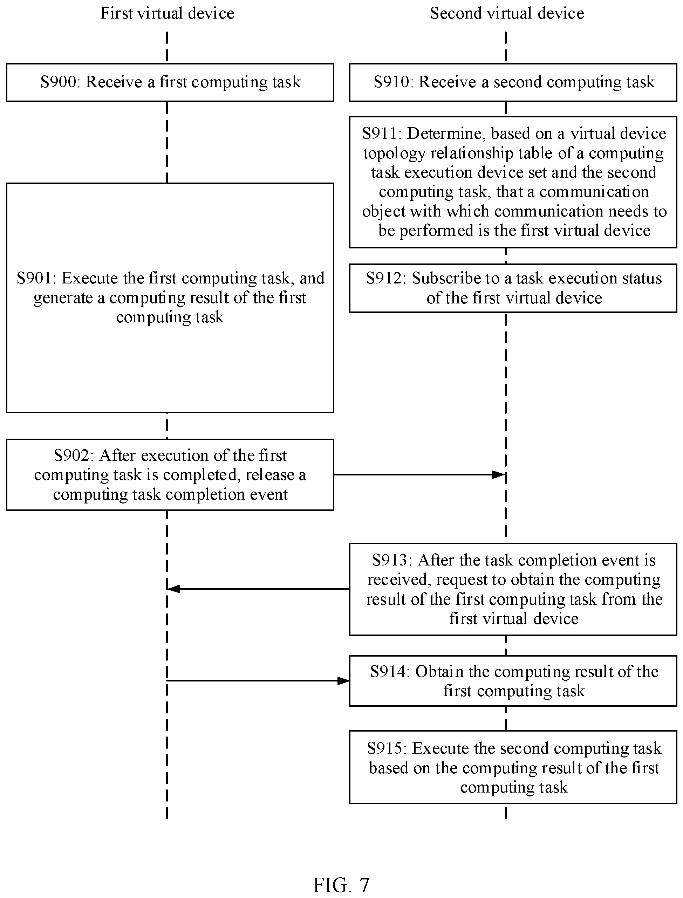

FIG. 7 is a diagram of a part of a model training procedure according to an embodiment of this application.

S900: The virtual device 511 receives the computing task A.

S901: The virtual device 511 executes the computing task A, and after execution of the computing task A is completed, the virtual device 511 generates the computing result of the computing task A.

S910: The virtual device 512 receives the computing task B.

For example, the computing task A and the computing task B are error value computing steps of two adjacent layers in a process of forward computing of the local error value in step a. A layer corresponding to the computing task A is an upper layer of a layer corresponding to the computing task B. Execution of the computing task B needs to be performed based on a computing result of the computing task A.

For another example, the computing task A is an error value computing step at a layer in a process of forward computing of the local error value in step a. The computing task B is a step of generating the global error value through integration in step b. To execute the computing task B, a computing result of the computing task A needs to be collected.

S911: The virtual device 512 determines, based on the virtual device topology relationship table of the computing task execution device set and the computing task B, that a communication object with which communication needs to be performed is the virtual device 511.

S912: The virtual device 512 subscribes to a task execution status of the virtual device 511.

S902: After completing execution of the computing task A, the virtual device 511 releases a computing task completion event.

S913: After receiving the task completion event, the virtual device 512 requests to obtain the computing result of the computing task A from the virtual device 511.

S914: The virtual device 512 obtains the computing result of the computing task A.

Specifically, in an embodiment, the virtual device 511 and the virtual device 512 are virtual devices created in a same heterogeneous computing device, and the virtual device 512 obtains a first computing result through internal communication of the heterogeneous computing device. In another embodiment, the virtual device 511 and the virtual device 512 are virtual devices created in different heterogeneous computing devices, and the virtual device 512 obtains a first computing result through communication between the heterogeneous computing devices, for example, communication through a network channel between the heterogeneous computing devices, and communication through a PCIe data channel between the heterogeneous computing devices.

Further, a person skilled in the art may implement obtaining of the first computing result by the virtual device 512 in a plurality of manners.

For example, the virtual device 511 and the virtual device 512 are virtual devices created in a same heterogeneous computing device. The virtual device 511 stores the first computing result in a shared memory. The virtual device 511 releases a storage location (a memory address) of the first computing result to the virtual device 512. The virtual device 512 directly reads the first computing result in the shared memory based on the storage location of the first computing result.

For another example, the virtual device 511 and the virtual device 512 are virtual devices created in different heterogeneous computing devices. The virtual device 511 sends, through a communication channel between the heterogeneous computing devices, the first computing result to the heterogeneous computing device in which the virtual device 512 is located. Alternatively, the virtual device 511 sends, through a communication channel between the heterogeneous computing devices, a storage address of the first computing result to the heterogeneous computing device in which the virtual device 512 is located. The virtual device 512 directly accesses, based on the communication channel between the heterogeneous computing devices, a memory (remote direct memory access (Remote Direct Memory Access, RDMA)) of the heterogeneous computing device in which the virtual device 511 is located.

S915: The virtual device 512 executes the computing task B based on the computing result of the computing task A.

According to the method in this embodiment of this application, the virtual device senses a real-time status of each computing task, and may initiate a communication task in real time after computing of a single computing task is completed. When the parallel computing framework uniformly manages statuses of all computing tasks, after a single computing task is completed, the computing task needs to wait for the computing framework to deliver a communication task to implement communication. Compared with that, the method in this embodiment of this application can reduce computing power consumption.

Further, when the first virtual device and the second virtual device are virtual devices created in a same heterogeneous computing device, communication between the first virtual device and the second virtual device is essentially internal communication of the heterogeneous computing device. Internal communication of the heterogeneous computing device does not need to involve procedures such as interface invoking and communication link establishment, and communication time consumption can be ignored theoretically.

Therefore, in an embodiment, when a computing task is distributed, for a computing task that has a communication requirement, the computing task is preferentially distributed to a virtual device created in a same heterogeneous computing device, to reduce waiting duration when the virtual device executes the computing task.

According to the method in this embodiment of this application, a plurality of virtual devices are deployed in a single heterogeneous computing device, to implement distributed parallel training of a plurality of processes (a plurality of channels of data) deployed in the single heterogeneous computing device. Theoretically, it is expected that a batch size deployed in the single heterogeneous computing device is more than doubled.

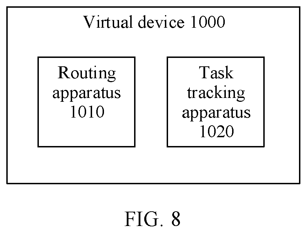

FIG. 8 is a diagram of a structure of a virtual device according to an embodiment of this application.

As shown in FIG. 8, in an embodiment, the virtual device 1000 includes a routing apparatus 1010 and a task tracking apparatus 1020.

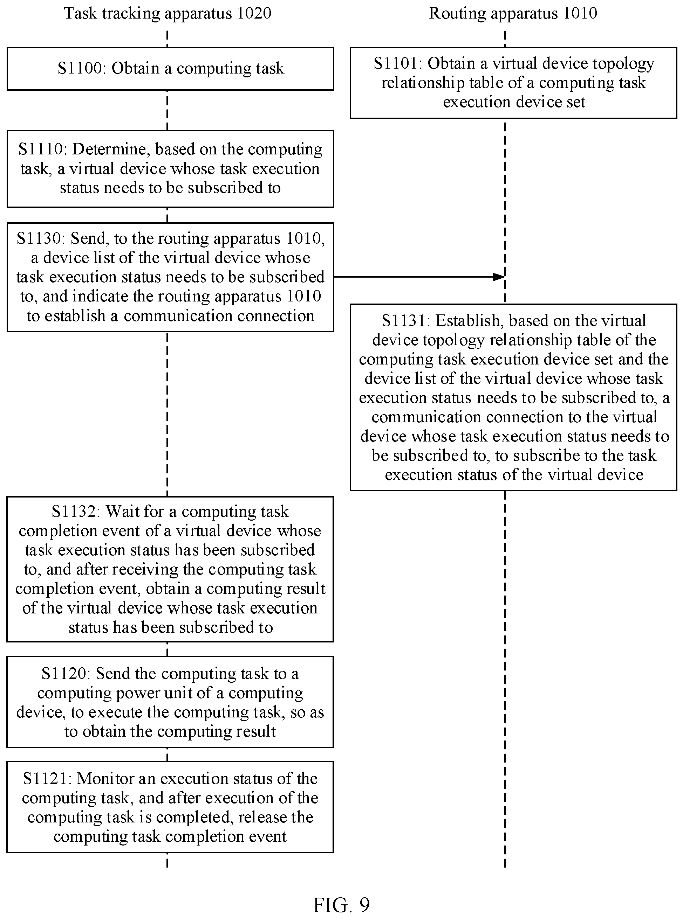

FIG. 9 is a diagram of a part of a model training procedure according to an embodiment of this application.

In iterative computing, the virtual device shown in FIG. 8 performs the following procedure shown in FIG. 9.

S1100: The task tracking apparatus 1020 obtains a computing task.

S1101: The routing apparatus 1010 obtains a virtual device topology relationship table of a computing task execution device set.

S1110: The task tracking apparatus 1020 determines, based on the computing task, a virtual device whose task execution status needs to be subscribed to (a virtual device that needs to perform data copying).

When the task tracking apparatus 1020 does not need to subscribe to a task execution status of another virtual device, S1120 is performed.

S1120: The task tracking apparatus 1020 sends the computing task to a computing power unit of a heterogeneous computing device, to execute the computing task, so as to obtain the computing result.

S1121: The task tracking apparatus 1020 monitors an execution status of the computing task, and after execution of the computing task is completed, releases the computing task completion event.

When the task tracking apparatus 1020 does not need to subscribe to a task execution status of another virtual device, S1130 is performed.

S1130: The task tracking apparatus 1020 sends, to the routing apparatus 1010, a device list of the virtual device whose task execution status needs to be subscribed to, and indicates the routing apparatus 1010 to establish a communication connection.

S1131: The routing apparatus 1010 establishes, based on the virtual device topology relationship table of the computing task execution device set and the device list of the virtual device whose task execution status needs to be subscribed to, a communication connection to the virtual device whose task execution status needs to be subscribed to, to subscribe to the task execution status of the virtual device.

S1132: The task tracking apparatus 1020 waits for a computing task completion event of a virtual device whose task execution status has been subscribed to, and after receiving the computing task completion event, obtains a computing result of the virtual device whose task execution status has been subscribed to.

After S1132, S1120 is performed.

Further, in an embodiment, communication between the electronic device and the virtual device and communication between virtual devices are implemented based on collective communication.

Collective communication (Collective Communication) is a global communication operation in which all processes in a process group participate. Basic operations of collective communication include sending (send), receiving (receive), copying (copy), intra-group process barrier synchronization (Barrier), and process synchronization between nodes (signal + wait). These basic operations are combined to form a group of communication templates, which are also referred to as communication primitives (or collective communication operators).

For example, the collective communication operator includes: one-to-many broadcast (broadcast), many-to-one gather (gather), many-to-many gather (all-gather), one-to-many scatter (scatter), many-to-one reduce (reduce), many-to-many reduce (all-reduce), combined reduce and scatter (reduce-scatter), and many-to-many (all-to-all).

Specifically, the routing apparatus is deployed outside the parallel computing framework, and the routing apparatus is configured to generate, based on virtual device topology relationships of the plurality of virtual devices, the collective communication operator for collective communication. In this way, in an iterative computing process, the collective communication is implemented without participation of the parallel computing framework, so that flexibility and communication efficiency of the collective communication are improved.

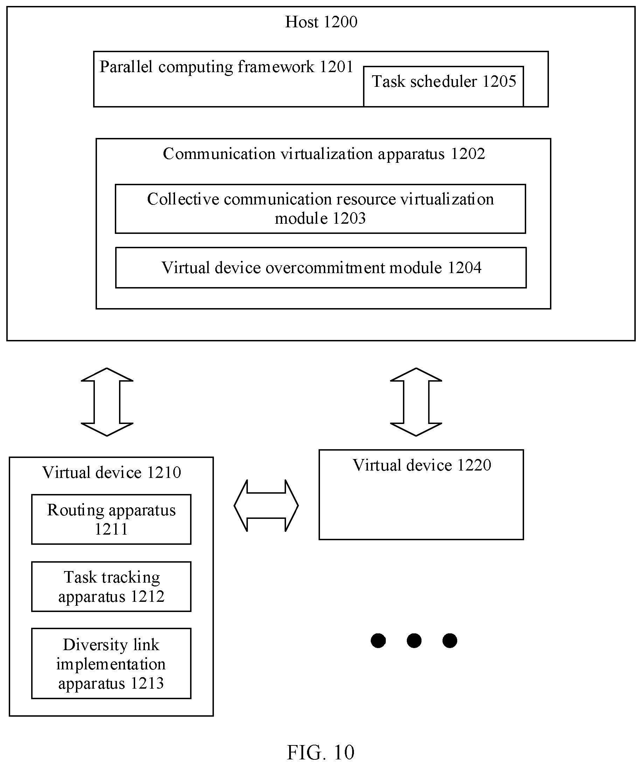

FIG. 10 is a diagram of an architecture of a hardware device for implementing model training according to an embodiment of this application.

As shown in FIG. 10, the hardware device for implementing model training includes an electronic device 1200 and a plurality of virtual devices created based on a heterogeneous computing device, and the plurality of virtual devices include at least a virtual device 1210 and a virtual device 1220.

The electronic device 1200 includes a parallel computing framework 1201 and a communication virtualization apparatus 1202. The parallel computing framework 1201 includes a task scheduler 1205.

The parallel computing framework 1201 delivers a collective communication command to the virtual device through the communication virtualization apparatus 1202.

The communication virtualization apparatus 1202 includes a collective communication resource virtualization module 1203 and a virtual device overcommitment module 1204.

The collective communication resource virtualization module 1203 is configured to present a collective communication attribute of the virtual device to an upper-layer user and the parallel computing framework 1201. Specifically, a collective communication attribute resource is configured for each virtual device, including but not limited to a rank, a group, and the like. Supportive reconstruction is performed on a tool for querying a communication topology attribute, to provide support for a topology, a communication attribute, and the like of the virtual device.

The collective communication resource virtualization module 1203 is further configured to perform virtualization support on a collective communication physical resource. Specifically, a control flow notification mechanism between virtual devices is newly supported, and division, overcommitment preemption, and the like are performed on hardware communication resources (including but not limited to a network channel (RDMA), a PCIe data channel, and the like).

The virtual device overcommitment module 1204 is configured to: optimize a virtualization technology, and support spatial division multiplexing of a resource and time division multiplexing of a same resource between a single card and a plurality of virtual devices. For example, the virtual device 1211 executes a computing task and occupies a computing resource, and the virtual device 1212 executes a communication task and occupies a network resource.

The routing apparatus is deployed in each virtual device. Specifically, a routing apparatus, a task tracking apparatus, and a diversity link implementation apparatus are constructed in each of the plurality of virtual devices. The virtual device 1210 is used as an example. The virtual device 1210 includes a routing apparatus 1211, a task tracking apparatus 1212, and a diversity link implementation apparatus 1213.

The routing apparatus 1211 stores a virtual device routing table, and the virtual device routing table is used to record information like all virtual devices that need to perform data copying in a current computing task and a topology connection relationship. In an embodiment, the routing apparatus 1211 generates the virtual device routing table based on the virtual device topology relationship table of the computing task execution device set and the device list that is of the virtual device whose task execution status needs to be subscribed to and that is determined by the task tracking apparatus 1212.

For example, in an application scenario, in a routing apparatus of a virtual device, content of a virtual device routing table is shown in Table 1.

**Table 1**

| Rank (device ID) | Memory address | Status | Protocol | Processing process |
|---|---|---|---|---|
| 0 | 0x1000 | Completed | Shared memory | Memcpy |
| 1 | 0x2000 | Receiving | RDMA | Recv() |
| N | 0xffff | Wait for the computing to be completed | PCIe/NVLINK | DMA/... |

The routing apparatus 1211 is configured to: generate a collective communication operator based on the virtual device routing table, and drive, based on the collective communication operator, the diversity link implementation apparatus to select a communication link to establish a communication connection. The routing apparatus 1211 is triggered by the task tracking apparatus 1212.

The diversity link implementation apparatus 1213 is configured to select the communication link based on the collective communication operator, to establish the communication connection based on the selected communication link. For example, the diversity link implementation apparatus 1213 selects, based on a type of the collective communication operator, a corresponding hardware unit (a DMA controller or a network controller) to establish the communication connection, to implement data synchronization.

Specifically, in an embodiment, that the diversity link implementation apparatus 1213 implements data synchronization is specifically:
Virtual devices of a same heterogeneous computing device transmit memfd through the shared memory for data communication;
virtual devices of different heterogeneous computing devices of a same electronic device support link resource division based on a hardware type (PCIE/HCCS); and
virtual devices of different heterogeneous computing devices across electronic devices select an RDMA/TCP protocol for implementation, where multi-process port isolation is used between the virtual devices.

According to the method in this embodiment of this application, the parallel computing framework is not responsible for managing a device topology and inter-device communication, but transfers a collective communication capability to the virtual device.

Further, in an iterative computing process, there is an application scenario in which a computing task on a virtual device (a task outgoing device) is migrated to another virtual device (a task incoming device) for execution. After the computing task is migrated, the task outgoing device in the computing task execution device set is replaced with the task incoming device.

In the foregoing application scenario, in an embodiment, the computing task migration is completed on a virtual device side, and a front-end user interface and a parallel computing framework on an electronic device side do not need to sense and respond to the computing task migration. In other words, after the computing task is migrated, information indicating that the virtual device topology relationship changes is not sent to the parallel computing framework, so that the parallel computing framework does not sense the change of the virtual device topology relationship. In this way, the computing task migration does not need to trigger re-division and distribution of the computing task, and the computing task migration does not interrupt execution of single iterative computing.

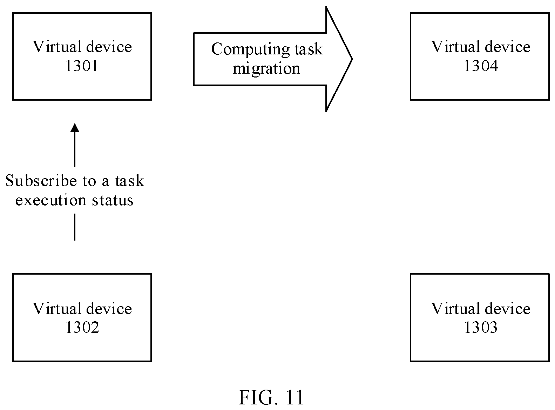

FIG. 11 is a diagram of virtual devices according to an embodiment of this application.

As shown in FIG. 11, a virtual device 1301 (a first virtual device), a virtual device 1302 (a fourth virtual device), and a virtual device 1303 (a second virtual device) are virtual devices of a computing task execution device set. A virtual device 1304 (a third virtual device) is a virtual device outside the computing task execution device set.

A computing task S1 (a first computing task), a computing task S2 (a third computing task), and a computing task S3 (a second computing task) are respectively distributed to the virtual device 1301, the virtual device 1302, and the virtual device 1303. A computing result of the computing task S1 needs to be introduced for execution of the computing task S2. Therefore, after the computing task is distributed, the virtual device 1302 subscribes to a task execution status of the virtual device 1301. The computing result of the computing task S1 does not need to be introduced for execution of the computing task S3. Therefore, after the computing task is distributed, the virtual device 1303 does not subscribe to the task execution status of the virtual device 1301.

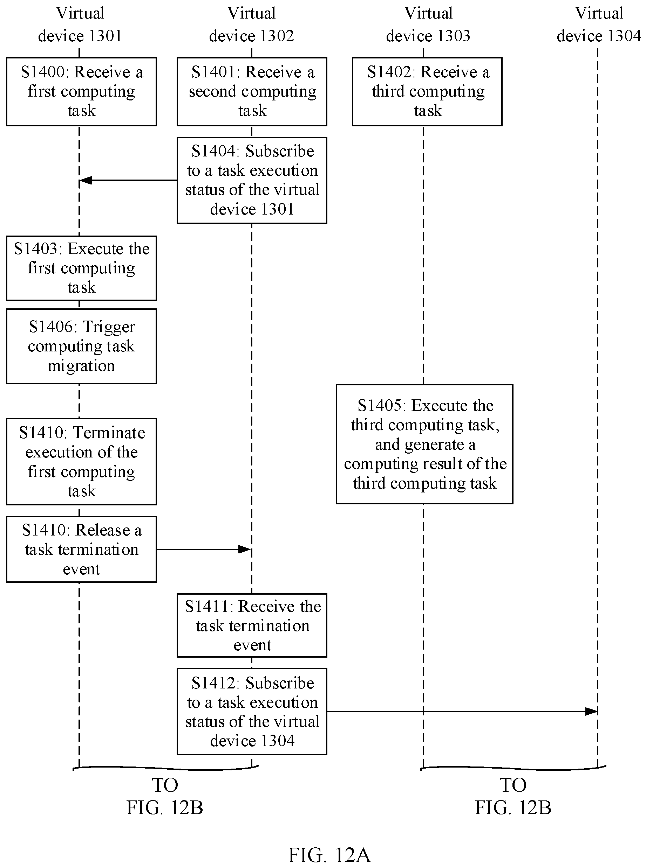

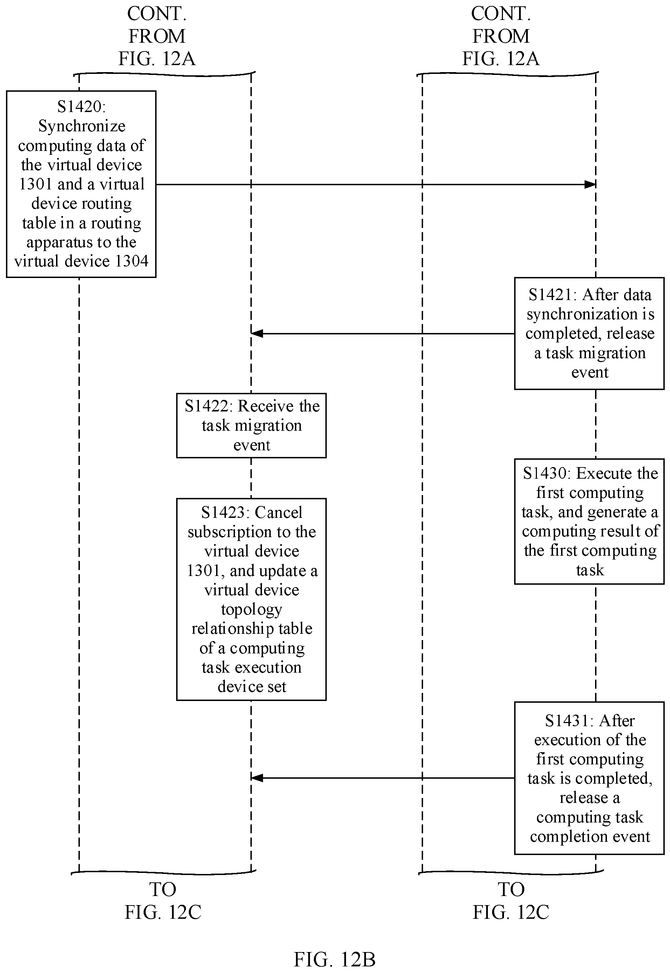

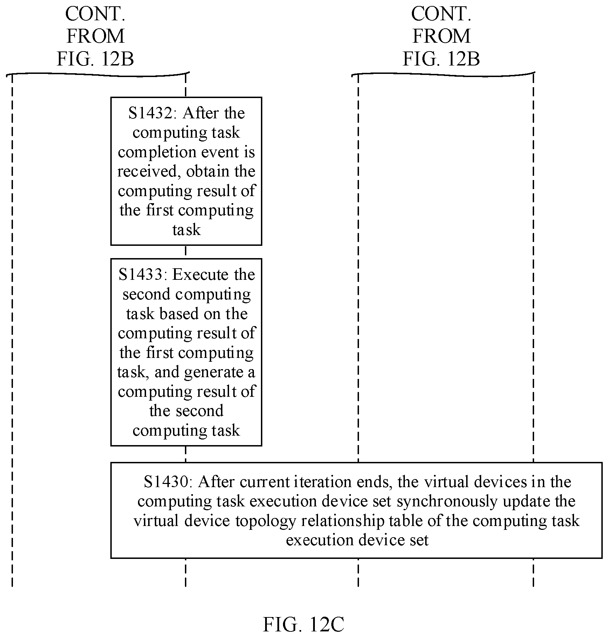

FIG. 12A to FIG. 12C is a diagram of a computing task migration procedure according to an embodiment of this application.

S1400: The virtual device 1301 receives the computing task S1.

S1401: The virtual device 1302 receives the computing task S2.

S1402: The virtual device 1303 receives the computing task S3.

S1403: The virtual device 1301 executes the computing task S1.

S1404: The virtual device 1302 subscribes to the task execution status of the virtual device 1301.

S1405: The virtual device 1303 executes the computing task S3, and generates a computing result of the computing task S3.

S1406: Trigger computing task migration, where the computing task migration is that the computing task S1 of the virtual device 1301 is migrated to the virtual device 1304.

Specifically, a trigger condition of the computing task migration is not specifically limited in this application. For example, in an embodiment, an execution error of the computing task triggers the computing task migration. In another embodiment, dynamic scheduling of the virtual device triggers the computing task migration.

S1410: The virtual device 1301 terminates execution of the computing task S1.

S1410: The virtual device 1301 releases a task termination event.

S1411: The virtual device 1302 receives the task termination event.

Because the virtual device 1303 does not subscribe to the task execution status of the virtual device 1301, the virtual device 1303 does not receive the task termination event, or the virtual device 1303 does not respond after receiving the task termination event.

S1412: The virtual device 1302 subscribes to a task execution status of the virtual device 1304 based on the task termination event.

S1420: Synchronize computing data of the virtual device 1301 and a virtual device routing table in a routing apparatus to the virtual device 1304.

S1421: After data synchronization is completed, the virtual device 1304 releases a task migration event.

In a data synchronization process, the virtual device 1304 updates the synchronized virtual device routing table.

S1422: The virtual device 1302 receives the task migration event.

Because the virtual device 1303 does not subscribe to the task execution status of the virtual device 1304, the virtual device 1303 does not receive the task termination event, or the virtual device 1303 does not respond after receiving the task termination event.

S1423: The virtual device 1302 cancels subscription to the virtual device 1301, and updates a virtual device topology relationship table (updates a virtual device routing table) of the computing task execution device set.

Specifically, in an embodiment, when the virtual device 1302 receives the task termination event but does not receive the task migration event, the virtual device 1302 determines that the computing task migration fails, and the virtual device 1302 reports an error, and terminates current iterative computing or triggers re-execution of the computing task migration.

After S1423, the information indicating that the virtual device topology relationship changes is not fed back to a parallel computing framework, so that the parallel computing framework does not sense the change of the virtual device topology relationship.

After S1421, the virtual device 1304 performs S1430.

S1430: The virtual device 1304 continues to execute the computing task S1, and generates the computing result of the computing task S1.

S1431: After completing execution of the computing task S1, the virtual device 1304 releases a computing task completion event.

S1432: After receiving the computing task completion event, the virtual device 1302 obtains the computing result of the computing task S1.

S1433: The virtual device 1302 executes the computing task S2 based on the computing result of the computing task S1, to generate a computing result of the computing task S2.

S1430: After current iteration ends, the virtual devices (including the virtual device 1302, the virtual device 1303, and the virtual device 1304, and excluding the virtual device 1301) in the computing task execution device set synchronously update the virtual device topology relationship table of the computing task execution device set (update the virtual device routing table in the routing apparatus), where a virtual device topology relationship table in a virtual device routing table in a routing apparatus of the virtual device 1303 is synchronously updated to virtual device topology relationship tables in virtual device routing tables in routing apparatuses of the virtual device 1302 and the virtual device 1304.

In an embodiment, after S1430, the information indicating that the virtual device topology relationship changes is not fed back to the parallel computing framework, and a communication virtualization apparatus presents, in the parallel computing framework by replacing description information like a name of the virtual device, a virtual device topology relationship that does not change. For example, before the computing task of the virtual device 1301 is migrated to the virtual device 1304, the communication virtualization apparatus presents the virtual device 1301 as a heterogeneous computing device A in the parallel computing framework. After the computing task of the virtual device 1301 is migrated to the virtual device 1304, the communication virtualization apparatus presents the virtual device 1304 as a heterogeneous computing device A in the parallel computing framework. In this way, in the parallel computing framework, a device topology relationship that is of a plurality of heterogeneous computing devices and that is presented by the plurality of virtual devices does not change.

In another embodiment, after S1430, the information indicating that the virtual device topology relationship changes is fed back to the parallel computing framework, so that the parallel computing framework performs computing task division and distribution for a next iteration based on a new virtual device topology relationship.

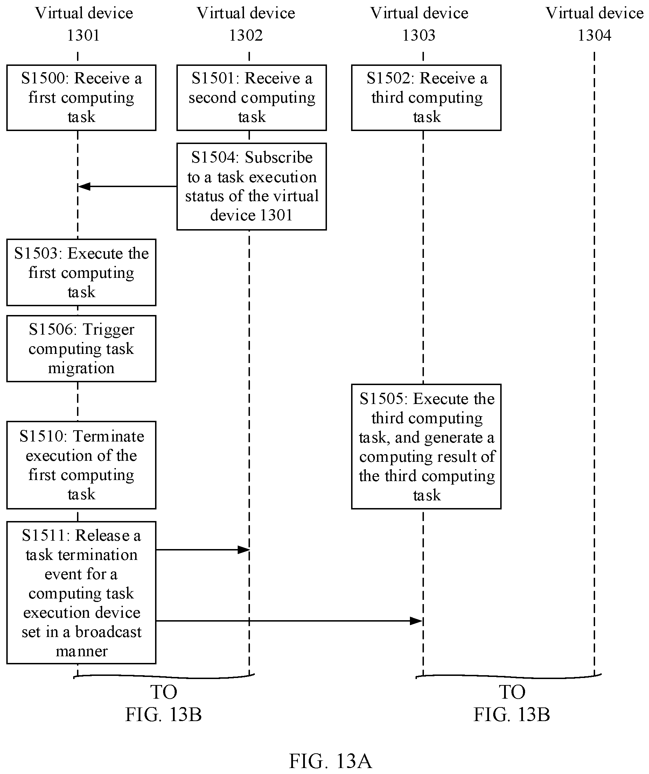

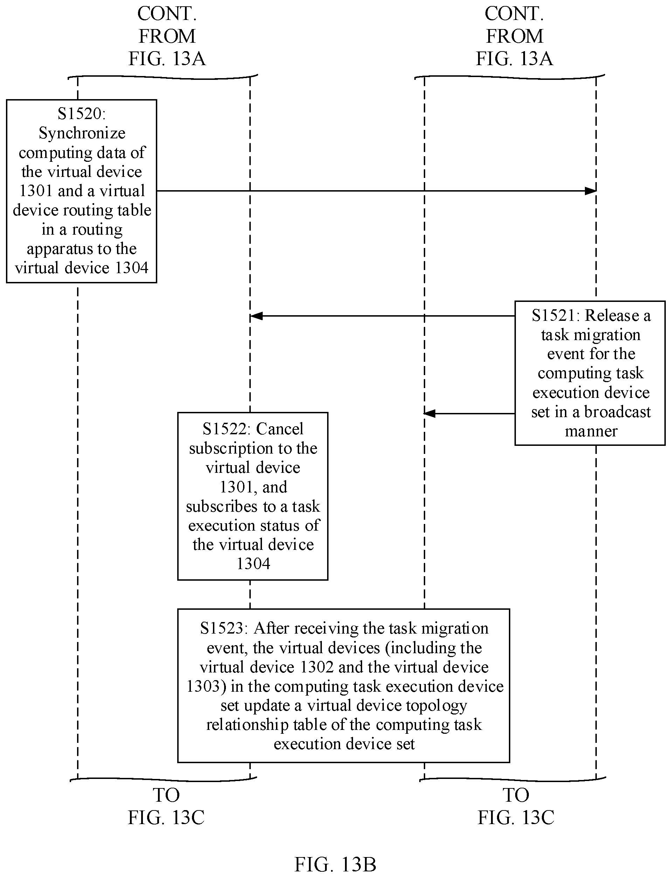

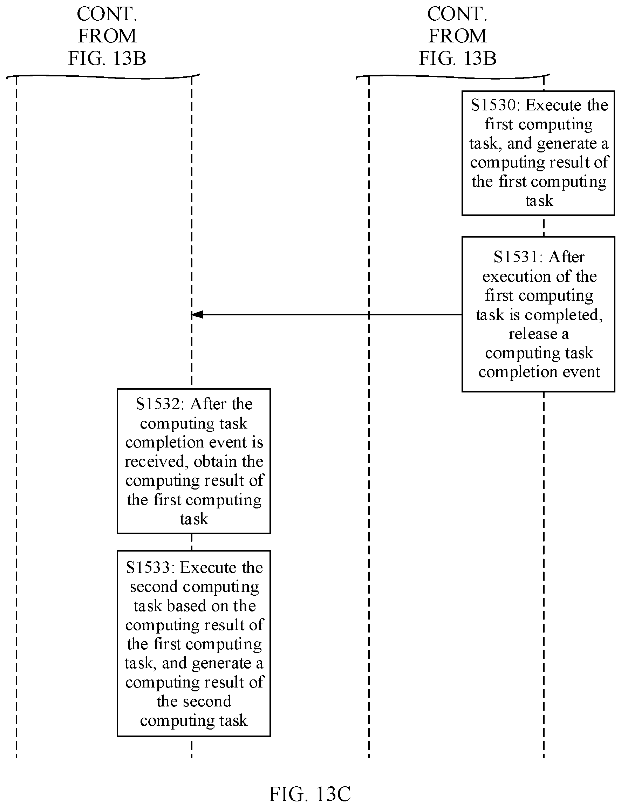

FIG. 13A to FIG. 13C are a diagram of a computing task migration procedure according to an embodiment of this application.

S1500: The virtual device 1301 receives the computing task S1.

S1501: The virtual device 1302 receives the computing task S2.

S1502: The virtual device 1303 receives the computing task S3.

S1503: The virtual device 1301 executes the computing task S1.

S1504: The virtual device 1302 subscribes to the task execution status of the virtual device 1301.

S1505: The virtual device 1303 executes the computing task S3, and generates a computing result of the computing task S3.

S1506: Trigger computing task migration, where the computing task migration is that the computing task S1 of the virtual device 1301 is migrated to the virtual device 1304.

S1510: The virtual device 1301 terminates execution of the computing task S1.

S1511: The virtual device 1301 releases a task termination event for the computing task execution device set in a broadcast manner.

The virtual devices (including the virtual device 1302 and the virtual device 1303) in the computing task execution device set receive the task termination event. The virtual device 1303 may receive the task termination event in a process of executing the computing task S3 or after the computing task S3 is executed.

S1520: Synchronize computing data of the virtual device 1301 and a virtual device routing table to the virtual device 1304.

S1521: After data synchronization is completed, the virtual device 1304 releases a task migration event for the computing task execution device set in a broadcast manner.

The virtual devices (including the virtual device 1302 and the virtual device 1303) in the computing task execution device set receive the task migration event. The virtual device 1303 may receive the task migration event in a process of executing the computing task S3 or after the computing task S3 is executed.

Specifically, in an embodiment, when the virtual devices (including the virtual device 1302 and the virtual device 1303) in the computing task execution device set receive the task termination event but do not receive the task migration event, it is determined that the computing task migration fails, and current iterative computing is terminated or re-execution of the computing task migration is triggered.

S1522: The virtual device 1302 cancels subscription to the virtual device 1301, and subscribes to a task execution status of the virtual device 1304.

S1523: After receiving the task migration event, the virtual devices (including the virtual device 1302 and the virtual device 1303) in the computing task execution device set update a virtual device topology relationship table of the computing task execution device set (update a virtual device routing table in a routing apparatus).

After S1523, the information indicating that the virtual device topology relationship changes is not fed back to a parallel computing framework, so that the parallel computing framework does not sense the change of the virtual device topology relationship.

After S1523, the virtual device 1304 performs S1530.

S1530: The virtual device 1304 continues to execute the computing task S1, and generates the computing result of the computing task S1.

S1531: After completing execution of the computing task S1, the virtual device 1304 releases a computing task completion event.

S1532: After receiving the computing task completion event, the virtual device 1302 obtains the computing result of the computing task S1.

S1533: The virtual device 1302 executes the computing task S2 based on the computing result of the computing task S1, to generate a computing result of the computing task S2.

According to the method in this embodiment of this application, the parallel computing framework is not responsible for managing a device topology and inter-device communication, but transfers a collective communication capability to the virtual device, supports dynamic migration of the computing task in the iterative computing process, and dynamically updates link information of the virtual device. A computing framework layer does not need to recompile and generate a communication operator after sensing, so that a waste of computing power waiting is reduced.

In a large model distributed training scenario, a product implementation form of the present invention includes program code that is in machine learning and deep learning platform software and that is deployed on server hardware. The program code of the present invention exists inside a runtime engine and a communication management module of the platform software, and outside an existing module. During running, the program code of the present invention is run in a memory of the electronic device of the server and a memory of the heterogeneous device like NPU/GPU/Ascend.

Refer to the embodiment shown in FIG. 8 and the embodiment shown in FIG. 10. In an embodiment of this application, a routing apparatus is deployed in each virtual device. Specifically, a routing apparatus and a task tracking apparatus are deployed in each virtual device in the computing task execution device set.

For example, in an embodiment, a MindSpor distributed training framework is used to implement large model distributed training based on a vNPU virtual device.

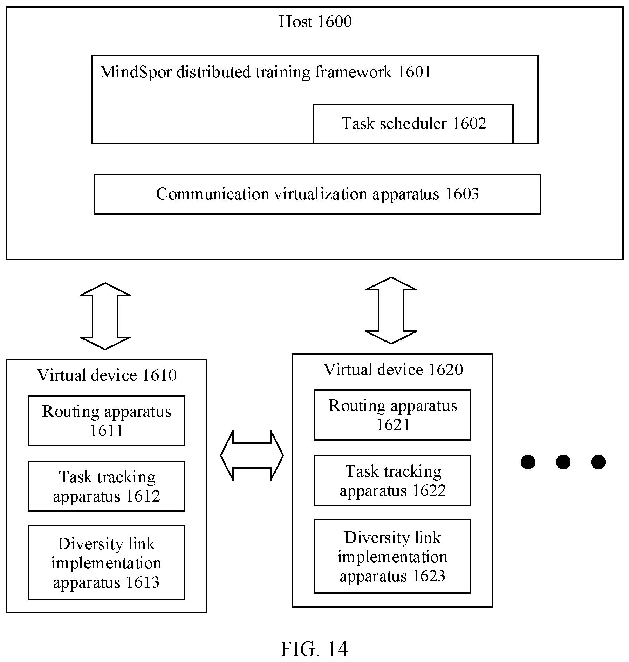

FIG. 14 is a diagram of an architecture of a hardware device for implementing model training according to an embodiment of this application.

As shown in FIG. 14, the hardware device for implementing model training includes an electronic device 1600. The electronic device 1600 includes a MindSpor distributed training framework 1601. The MindSpor distributed training framework 1601 includes a task scheduler 1602.

A communication virtualization apparatus 1603 is further deployed in the electronic device 1600. The communication virtualization apparatus 1603 presents a "one-to-many virtualization" effect to the MindSpor distributed training framework 1601 and a user, and virtualizes the heterogeneous computing device (NPU device) into a plurality of virtual devices (vNPU devices). For example, as shown in FIG. 12A to FIG. 12C, the plurality of virtual devices include at least a virtual device 1610 and a virtual device 1620.

The user specifies one or more virtual devices for model training by configuring a RankTable. The MindSpor distributed training framework 1501 compiles and divides a training task according to a parallelism strategy specified by the user, generates a plurality of computing tasks, and schedules the virtual devices to complete training.

In the embodiment shown in FIG. 12A to FIG. 12C, a corresponding routing apparatus, a task tracking apparatus, and a diversity link implementation apparatus are deployed in each virtual device. For example, the virtual device 1610 includes a routing apparatus 1611, a task tracking apparatus 1612, and a diversity link implementation apparatus 1613. The virtual device 1620 includes a routing apparatus 1621, a task tracking apparatus 1622, and a diversity link implementation apparatus 1623.

In another embodiment, a routing apparatus is deployed in an electronic device. Specifically, the routing apparatus and the task tracking apparatus are deployed in the electronic device, and the routing apparatus and the task tracking apparatus that are deployed in the electronic device manage each virtual device in the computing task execution device set.

For example, in an embodiment, a PyTorch distributed training framework is used to implement large model distributed training based on a vNPU or a vGPU device.

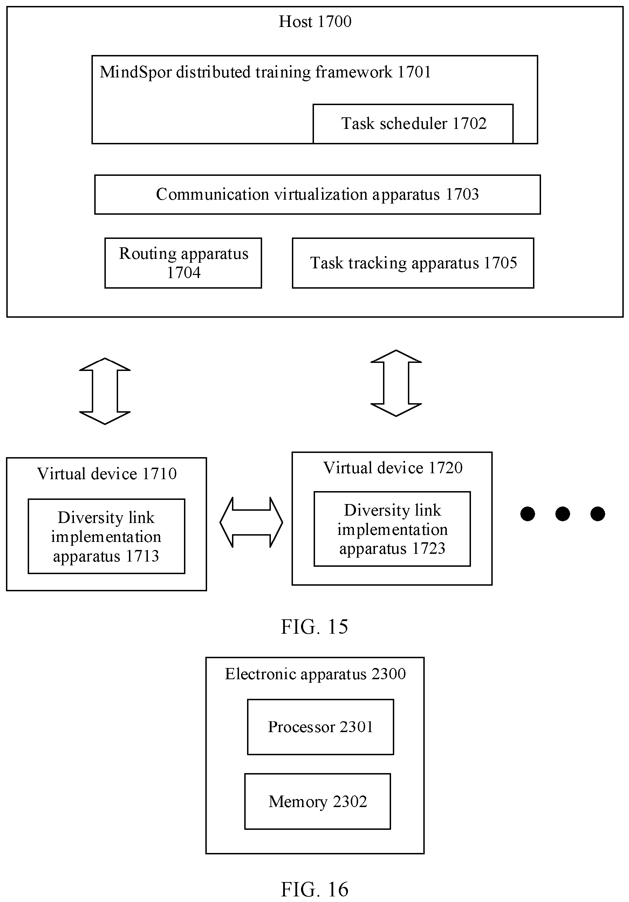

FIG. 15 is a diagram of an architecture of a hardware device for implementing model training according to an embodiment of this application.

As shown in FIG. 15, the hardware device for implementing model training includes an electronic device 1700. The electronic device 1700 includes a PyTorch distributed training framework 1701. The PyTorch distributed training framework 1701 includes a task scheduler 1702.

A communication virtualization apparatus 1703 is further deployed in the electronic device 1700. The communication virtualization apparatus 1703 presents a "one-to-many virtualization" effect to the PyTorch distributed training framework 1701 and a user, and virtualizes the heterogeneous computing device into a plurality of virtual devices (vNPU devices or vGPU devices). For example, as shown in FIG. 13A to FIG. 13C, the plurality of virtual devices include at least a virtual device 1710 and a virtual device 1720.

The PyTorch distributed training framework 1701 is in a single-communication operator delivery mode, and all collective communication operators are generated and delivered on an electronic device side. Specifically, the routing apparatus 1704 and the task tracking apparatus 1705 are deployed in the electronic device 1700. A plurality of instance objects are created in the routing apparatus 1704 and the task tracking apparatus 1705. The instance objects of the routing apparatus 1704 and the task tracking apparatus 1705 maintain a one-to-one relationship with the virtual devices, and each instance object manages one virtual device. A diversity link implementation apparatus is deployed in each virtual device. For example, the virtual device 1710 includes a diversity link implementation apparatus 1713, and the virtual device 1720 includes a diversity link implementation apparatus 1723.

In an application scenario of computing task migration, the routing apparatus 1704 and the task tracking apparatus 1705 jointly complete dynamic link switching when a topology changes, and the PyTorch distributed training framework 1701 does not need to sense and intervene.

According to the method in this embodiment of this application, an embodiment of this application further provides a model training apparatus. The model training apparatus includes a parallel computing framework and a plurality of virtual devices.

The plurality of virtual devices are virtual devices created based on a heterogeneous computing device.

The parallel computing framework is loaded on an electronic device, and the parallel computing framework is configured to: divide a model training task into a plurality of computing tasks, and distribute the plurality of computing tasks to the plurality of virtual devices, where the plurality of virtual devices are in a one-to-one correspondence with the plurality of computing tasks.

The plurality of virtual devices are configured to execute the distributed computing tasks, to perform iterative computing for model training.

Optionally, in an embodiment, the apparatus further includes a communication virtualization apparatus.

The communication virtualization apparatus is deployed on the electronic device, and the communication virtualization apparatus is deployed outside the parallel computing framework.

The communication virtualization apparatus is configured to present the plurality of virtual devices to the parallel computing framework in a form of a plurality of heterogeneous computing devices.

Optionally, in an embodiment, communication between the parallel computing framework and the virtual devices and between the different virtual devices is collective communication.

The communication virtualization apparatus includes:
a collective communication resource virtualization module, configured to configure a collective communication attribute resource for the virtual device, and present a collective communication attribute of the virtual device to the parallel computing framework; and
a virtual device overcommitment module, configured to perform virtualization support on a collective communication physical resource.

Optionally, in an embodiment, the model training apparatus further includes a routing apparatus.

The routing apparatus is deployed outside the parallel computing framework, and is configured to generate, based on virtual device topology relationships of the plurality of virtual devices, a collective communication operator for collective communication.

Optionally, in an embodiment, the routing apparatus is configured to store a virtual device routing table, and the virtual device routing table is used to record all virtual devices that need to perform data copying in a current computing task and a topology connection relationship.

Optionally, in an embodiment, the routing apparatus is deployed on the electronic device, and the routing apparatus includes instance objects that are in a one-to-one correspondence with the plurality of the virtual devices.

Optionally, in an embodiment, the routing apparatus is deployed in each virtual device.

Optionally, in an embodiment, the plurality of computing tasks include at least a first computing task and a second computing task; the plurality of virtual devices include at least a first virtual device and a second virtual device; the parallel computing framework distributes the first computing task to the first virtual device, and distributes the second computing task to the second virtual device; and the first virtual device executes the first computing task, and the second virtual device executes the second computing task.

The apparatus further includes a task migration module and a third virtual device.

The task migration module is configured to: when task migration from the first virtual device to the third virtual device is triggered, terminate execution, by the first virtual device, of the first computing task, and keep the second virtual device executing the second computing task, where executing the task migration includes synchronizing the first computing task in the first virtual device and a current execution status of the first computing task to the third virtual device.

The third virtual device is configured to continue to execute the first computing task after the task migration.

Optionally, in an embodiment, the routing apparatus is further configured to: after the task migration, update the virtual device topology relationships in the routing apparatus based on the task migration.

Optionally, in an embodiment, the routing apparatus is further configured to: after the task migration, skip feeding back, to the parallel computing framework, information indicating that the virtual device topology relationship changes.

Optionally, in an embodiment, the plurality of computing tasks further include at least a third computing task, execution of the third computing task needs to reference a computing result of the first computing task, and the plurality of virtual devices further include at least a fourth virtual device.

The parallel computing framework is configured to distribute the third computing task to the fourth virtual device.

The fourth virtual device is configured to: subscribe to a task execution status of the first virtual device based on the third computing task; after the first virtual device completes execution of the first computing task, obtain, by the fourth virtual device, the computing result of the first computing task; and execute the third computing task based on the computing result of the first computing task.

Optionally, in an embodiment, the fourth virtual device is further configured to:
after the task migration, update subscription to the task execution status of the first virtual device to subscription to a task execution status of the third virtual device.

Optionally, in an embodiment,
the task migration module is configured to synchronize a virtual device topology relationship in a routing apparatus of the first virtual device to a routing apparatus of the third virtual device.

The routing apparatus of the third virtual device is configured to: after the task migration, update a virtual device topology relationship in the routing apparatus of the third virtual device based on the task migration.

A routing apparatus of the fourth virtual device is configured to: after the task migration, update a virtual device topology relationship in the routing apparatus of the fourth virtual device based on the task migration.

In the descriptions of embodiments of this application, for ease of description, the apparatus is described by dividing functions into various modules. Division into the modules is merely logical function division. During implementation of embodiments of this application, the functions of the modules may be implemented in a same piece of or a plurality of pieces of software and/or hardware.

Specifically, in an actual implementation, all or some of the apparatuses provided in embodiments of this application may be integrated into one physical entity, or may be physically separated. In addition, all the modules may be implemented in a form of software invoked by a processing element; or may be implemented in a form of hardware; or some modules may be implemented in a form of software invoked by a processing element, and some modules are implemented in a form of hardware. For example, a detection module may be an independently disposed processing element, or may be integrated in one chip of an electronic device for implementation. Implementations of other modules are similar. In addition, all or some of the modules may be integrated, or may be implemented independently. In an implementation process, steps in the foregoing methods or the foregoing modules may be implemented by using a hardware integrated logical circuit in the processing element, or by using instructions in a form of software.

For example, the foregoing modules may be configured as one or more integrated circuits for implementing the foregoing method, for example, one or more application-specific integrated circuits (Application-Specific Integrated Circuit, ASIC), one or more digital signal processors (Digital Signal Processor, DSP), or one or more field programmable gate arrays (Field Programmable Gate Array, FPGA). For another example, these modules may be integrated together and implemented in a form of a system-on-a-chip (System-On-a-Chip, SOC).

This application further provides an electronic apparatus.

FIG. 16 is a diagram of a structure of an electronic apparatus according to an embodiment of this application.

As shown in FIG. 16, the electronic apparatus 2300 includes a memory 2302 configured to store computer program instructions and a processor 2301 configured to execute the program instructions. When the computer program instructions are executed by the processor 2301, the electronic apparatus 2300 is triggered to perform the method steps of the methods described in embodiments of this application.

Specifically, in an embodiment of this application, one or more computer programs are stored in the memory 2302, and the one or more computer programs include instructions. When the instructions are executed by the electronic apparatus 2300, the electronic apparatus 2300 is enabled to perform the method steps described in embodiments of this application.

It may be understood that the description of the structure of the electronic apparatus 2300 in this embodiment of this application does not constitute a specific limitation on the electronic apparatus 2300. In some other embodiments of this application, the electronic apparatus 2300 may include components other than the processor 2301 and the memory 2302.

The processor 2301 may be a system-on-a-chip SOC apparatus. The processor 2301 may include a central processing unit (Central Processing Unit, CPU), and may further include a processor of another type.

The processor 2301 may include, for example, a CPU, a DSP, a microcontroller, or a digital signal processor, and may further include a GPU, an embedded neural-network processing unit (Neural-network Processing Unit, NPU), and an image signal processor (Image Signal Processor, ISP). The processor may further include a necessary hardware accelerator or a logic processing hardware circuit, for example, an ASIC, or one or more integrated circuits configured to control program execution of the technical solutions in this application. In addition, the processor may have a function of operating one or more software programs. The software program may be stored in the storage medium.

The processor 2301 may include one or more processing units. For example, the processor may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors. In some embodiments, the electronic apparatus 2300 may alternatively include one or more processors 2301. The controller may generate an operation control signal based on instruction operation code and a time sequence signal, to complete control of instruction fetching and instruction execution.

In some embodiments, the processor 2301 may include one or more interfaces. The interface may include an inter-integrated circuit (inter-integrated circuit, I2C) interface, an integrated circuit sound (integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a SIM card interface, a USB interface, and/or the like. The USB interface is an interface that conforms to a USB standard specification, and may be specifically a mini USB interface, a micro USB interface, a USB Type-C interface, or the like. The USB interface may be configured to connect to a charger to charge the electronic apparatus, or may be configured to transmit data between the electronic apparatus and a peripheral device,

The electronic apparatus 2300 may further include an interface for external memory. The interface for external memory may be configured to connect to an external memory card, for example, a micro SD card, to extend a storage capability of the electronic apparatus. The external memory card communicates with the processor 2301 through the interface for external memory, to implement a data storage function. For example, files such as music and videos are stored in the external memory card.

The memory 2302 may include a code storage area and a data storage area. The code storage area may store an operating system. The data storage area may store data created during use of the electronic apparatus 2300, and the like. In addition, the memory 2302 may include a high-speed random access memory, or may include a nonvolatile memory, for example, one or more magnetic disk storage devices, a flash memory, or a universal flash storage (universal flash storage, UFS).

The memory 2302 may be a read-only memory (read-only memory, ROM) or another type of static storage device that can store static information and instructions, a random access memory (random access memory, RAM) or another type of dynamic storage device that can store information and instructions, an electrically erasable programmable read-only memory (electrically erasable programmable read-only memory, EEPROM), a compact disc read-only memory (compact disc read-only memory, CD-ROM) or another optical disk storage, an optical disc storage (including a compact disc, a laser disc, an optical disc, a digital versatile disc, a Blu-ray disc, or the like), a disk storage medium or another magnetic storage device, or any other medium that can be used to carry or store expected program code in a form of instructions or a data structure and that can be accessed by a computer.

The processor 2301 and the memory 2302 may be combined into one processing apparatus, but are more commonly components independent of each other.

In an embodiment, the electronic apparatus provided in this application may be the electronic device in the foregoing embodiments. Specifically, the electronic apparatus is configured to load a parallel computing framework, and the parallel computing framework loaded by the electronic apparatus is configured to perform the method steps performed by the parallel computing framework in the methods described in embodiments of this application. Specifically, when the computer program instructions in the memory 2302 are executed by the processor 2301, the electronic apparatus 2300 is triggered to perform the method steps performed by the electronic device in the methods described in embodiments of this application.

In another embodiment, the electronic apparatus provided in this application may be the heterogeneous computing device in the foregoing embodiments. Specifically, the electronic apparatus is configured to create a virtual device, and the virtual device created in the electronic apparatus is configured to perform the method steps performed by the virtual device in the methods described in embodiments of this application. Specifically, when the computer program instructions in the memory 2302 are executed by the processor 2301, the electronic apparatus 2300 is triggered to perform the method steps performed by the heterogeneous computing device in the methods described in embodiments of this application.

This application further provides a server cluster. The server cluster includes a memory configured to store computer program instructions and a processor configured to execute the computer program instructions. When the computer program instructions are executed by the processor, the server cluster is triggered to perform the method steps in embodiments of this application. Specifically, in an embodiment, the server cluster includes the electronic device and the heterogeneous computing device in embodiments of this application.

Further, the device, apparatus, and module described in embodiments of this application may be specifically implemented by a computer chip or an entity, or may be implemented by a product having a specific function.

A person skilled in the art should understand that embodiments of this application may be provided as a method, an apparatus, or a computer program product. Therefore, the present invention may use forms of complete hardware embodiments, complete software embodiments, or embodiments combining software and hardware. Moreover, the present invention may use a form of a computer program product that is implemented on one or more computer-usable storage media that include computer-usable program code.

In embodiments of this application, when any of the functions is implemented in a form of a software functional unit and sold or used as an independent product, the function may be stored in a computer-readable storage medium. Based on such an understanding, the technical solutions of this application essentially, or the part contributing to the conventional technology, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of this application.

Specifically, an embodiment of this application further provides a computer-readable storage medium. The computer-readable storage medium stores a computer program, and when the computer program is run on a computer, the computer is enabled to perform the method provided in embodiments of this application.

An embodiment of this application further provides a computer program product. The computer program product includes a computer program. When the computer program is run on a computer, the computer is enabled to perform the method provided in embodiments of this application.

Embodiments of this application are described with reference to the flowcharts and/or block diagrams of the method, the device (apparatus), and the computer program product according to embodiments of this application. It should be understood that computer program instructions may be used to implement each procedure and/or each block in the flowcharts and/or the block diagrams and a combination of a procedure and/or a block in the flowcharts and/or the block diagrams. The computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

These computer program instructions may be stored in a computer-readable memory that can indicate the computer or any other programmable data processing device to operate in a specific manner, so that the instructions stored in the computer-readable memory generate an artifact that includes an instruction apparatus. The instruction apparatus implements a specific function in one or more procedures in the flowchart diagrams and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It should be noted that in embodiments of this application, the term "at least one" means one or more, the term "a plurality of" means two or more. The term "and/or" describes an association relationship between associated objects and indicates that three relationships may exist. For example, A and/or B may indicate the following three cases: Only A exists, both A and B exist, and only B exists, A and B may be singular or plural. The character "/" usually indicates an "or" relationship between the associated objects. "At least one of the following" and similar expressions refer to any combination of these terms, including any combination of single or plural terms. For example, at least one of a, b, or c may represent a, b, c, a and b, a and c, b and c, or a, b, and c, where a, b, and c may be singular or plural.

In embodiments of this application, the term "include", "have", or any other variant thereof is intended to cover a non-exclusive inclusion, so that a process, a method, a commodity, or a device that includes a series of elements not only includes those elements but also includes other elements that are not expressly listed, or further includes elements inherent to such a process, method, commodity, or device. An element preceded by "includes a ..." does not, without more constraints, preclude an existence of additional identical elements in the process, method, commodity, or device that includes the element.

This application can be described in the general context of computer-executable instructions executed by a computer, for example, a program module. Generally, the program module includes a routine, program, object, component, data structure, and the like for executing a particular task or implementing a particular abstract data type. This application may be practiced in distributed computing environments in which tasks are performed by remote processing devices that are connected through a communications network. In a distributed computing environment, program modules may be located in both local and remote computer storage media including storage devices.

Embodiments in this application are described in a progressive manner, the same and similar parts between various embodiments can be referred to each other, and each embodiment focuses on differences from other embodiments Especially, an apparatus embodiment is basically similar to a method embodiment, and therefore is described briefly; for related parts, refer to partial descriptions in the method embodiment.

A person of ordinary skill in the art may be aware that units and algorithm steps described in embodiments of this application may be implemented by electronic hardware, or a combination of computer software and electronic hardware. Whether the functions are implemented by using hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing apparatus and unit, reference may be made to a corresponding process in the foregoing method embodiments, and details are not described herein again.

The foregoing descriptions are merely specific implementations of this application. Any variation or replacement readily figured out by a person skilled in the art within the technical scope disclosed in this application shall fall within the protection scope of this application. The protection scope of this application shall be subject to the protection scope of the claims.

## Claims

1. A model training method, wherein the method is applied to an electronic device loaded with a parallel computing framework and a heterogeneous computing device, and the method comprises:
dividing, by the parallel computing framework, a model training task into a plurality of computing tasks;
distributing, by the parallel computing framework, the plurality of computing tasks to a plurality of virtual devices, wherein the plurality of virtual devices are in a one-to-one correspondence with the plurality of computing tasks, and the plurality of virtual devices are virtual devices created based on the heterogeneous computing device; and
executing, by the plurality of virtual devices, the distributed computing tasks, to perform iterative computing for model training.

2. The method according to claim 1, wherein a communication virtualization apparatus is deployed on the electronic device, the communication virtualization apparatus presents the plurality of virtual devices to the parallel computing framework in a form of a plurality of heterogeneous computing devices, and the communication virtualization apparatus is deployed outside the parallel computing framework.

3. The method according to claim 2, wherein
communication between the parallel computing framework and the plurality of virtual devices and between the plurality of virtual devices is implemented based on collective communication; and
the communication virtualization apparatus is further configured to: configure a collective communication attribute resource for the virtual device, present a collective communication attribute of the virtual device to the parallel computing framework, and perform virtualization support on a collective communication physical resource.

4. The method according to claim 3, wherein a routing apparatus is deployed outside the parallel computing framework, and the routing apparatus is configured to generate, based on virtual device topology relationships of the plurality of virtual devices, a collective communication operator for collective communication.

5. The method according to claim **4,** wherein the routing apparatus is configured to store a virtual device routing table, and the virtual device routing table is used to record all virtual devices that need to perform data copying in a current computing task and a topology connection relationship.

6. The method according to claim 4 or 5, wherein the routing apparatus is deployed on the electronic device, and the routing apparatus comprises instance objects that are in a one-to-one correspondence with the plurality of the virtual devices.

7. The method according to claim 4 or 5, wherein the routing apparatus is deployed in each virtual device.

8. The method according to any one of claims 4 to 7, wherein the plurality of computing tasks comprise at least a first computing task and a second computing task;
distributing, by the parallel computing framework, the plurality of computing tasks to the plurality of virtual devices comprises: distributing the first computing task to a first virtual device, and distributing the second computing task to a second virtual device;
executing, by the virtual devices, the distributed computing tasks, to perform iterative computing for model training comprises:
executing, by the first virtual device, the first computing task, and executing, by the second virtual device, the second computing task;
when task migration from the first virtual device to a third virtual device is triggered, terminating execution, by the first virtual device, of the first computing task, and keeping the second virtual device executing the second computing task, wherein
executing the task migration comprises synchronizing the first computing task in the first virtual device and a current execution status of the first computing task to the third virtual device; and
continuing, by the third virtual device, to execute the first computing task.

9. The method according to claim 8, wherein executing, by the virtual devices, the distributed computing tasks, to perform iterative computing for model training further comprises:
after the task migration, updating the virtual device topology relationships in the routing apparatus based on the task migration.

10. The method according to claim 8, wherein executing, by the virtual devices, the distributed computing tasks, to perform iterative computing for model training further comprises:
after the task migration, skipping feeding back, to the parallel computing framework, information indicating that the virtual device topology relationship changes.

11. The method according to claim 9, wherein the plurality of computing tasks further comprise at least a third computing task, and execution of the third computing task needs to reference a computing result of the first computing task;
distributing, by the parallel computing framework, the plurality of computing tasks to the plurality of virtual devices further comprises: distributing the third computing task to a fourth virtual device; and
executing, by the plurality of virtual devices, the distributed computing tasks, to perform iterative computing for model training comprises: subscribing, by the fourth virtual device, to a task execution status of the first virtual device based on the third computing task; and after the first virtual device completes execution of the first computing task, obtaining, by the fourth virtual device, the computing result of the first computing task, and executing the third computing task based on the computing result of the first computing task.

12. The method according to claim **11,** wherein executing, by the virtual devices, the distributed computing tasks, to perform iterative computing for model training further comprises:
after the task migration, updating the fourth virtual device to subscribe to a task execution status of the third virtual device.

13. The method according to claim 12, wherein
executing the task migration further comprises synchronizing a virtual device topology relationship in a routing apparatus of the first virtual device to a routing apparatus of the third virtual device; and
after the task migration, updating the virtual device topology relationships in the routing apparatus based on the task migration comprises:
updating a virtual device topology relationship in the routing apparatus of the third virtual device, and updating a virtual device topology relationship in a routing apparatus of the fourth virtual device.

14. A model training apparatus, wherein the apparatus comprises a parallel computing framework and a plurality of virtual devices, wherein
the plurality of virtual devices are virtual devices created based on a heterogeneous computing device;
the parallel computing framework is loaded on an electronic device, and the parallel computing framework is configured to: divide a model training task into a plurality of computing tasks, and distribute the plurality of computing tasks to the plurality of virtual devices, wherein the plurality of virtual devices are in a one-to-one correspondence with the plurality of computing tasks; and
the plurality of virtual devices are configured to execute the distributed computing tasks, to perform iterative computing for model training.

15. The apparatus according to claim 14, wherein the apparatus further comprises a communication virtualization apparatus, wherein
the communication virtualization apparatus is deployed on the electronic device, and the communication virtualization apparatus is deployed outside the parallel computing framework; and
the communication virtualization apparatus is configured to present the plurality of virtual devices to the parallel computing framework in a form of a plurality of heterogeneous computing devices.

16. The apparatus according to claim 15, wherein communication between the parallel computing framework and the virtual devices and between the different virtual devices is collective communication; and
the communication virtualization apparatus comprises:
a collective communication resource virtualization module, configured to configure a collective communication attribute resource for the virtual device, and present a collective communication attribute of the virtual device to the parallel computing framework; and
a virtual device overcommitment module, configured to perform virtualization support on a collective communication physical resource.

17. The apparatus according to claim 16, wherein the apparatus further comprises a routing apparatus, wherein
the routing apparatus is deployed outside the parallel computing framework, and is configured to generate, based on virtual device topology relationships of the plurality of virtual devices, a collective communication operator for collective communication.

18. The apparatus according to claim 17, wherein the routing apparatus is configured to store a virtual device routing table, and the virtual device routing table is used to record all virtual devices that need to perform data copying in a current computing task and a topology connection relationship.

19. The apparatus according to claim 17 or 18, wherein the routing apparatus is deployed on the electronic device, and the routing apparatus comprises instance objects that are in a one-to-one correspondence with the plurality of the virtual devices.

20. The apparatus according to claim 17 or 18, wherein the routing apparatus is deployed in each virtual device.

21. The apparatus according to any one of claims 17 to 20, wherein the plurality of computing tasks comprise at least a first computing task and a second computing task; the plurality of virtual devices comprise at least a first virtual device and a second virtual device; the parallel computing framework distributes the first computing task to the first virtual device, and distributes the second computing task to the second virtual device; the first virtual device executes the first computing task, and the second virtual device executes the second computing task; and
the apparatus further comprises a task migration module and a third virtual device, wherein
the task migration module is configured to: when task migration from the first virtual device to the third virtual device is triggered, terminate execution, by the first virtual device, of the first computing task, and keep the second virtual device executing the second computing task, wherein executing the task migration comprises synchronizing the first computing task in the first virtual device and a current execution status of the first computing task to the third virtual device; and
the third virtual device is configured to continue to execute the first computing task after the task migration.

22. The apparatus according to claim 21, wherein the routing apparatus is further configured to: after the task migration, update the virtual device topology relationships in the routing apparatus based on the task migration.

23. The apparatus according to claim 21, wherein the routing apparatus is further configured to: after the task migration, skip feeding back, to the parallel computing framework, information indicating that the virtual device topology relationship changes.

24. The apparatus according to claim 22, wherein the plurality of computing tasks further comprise at least a third computing task, execution of the third computing task needs to reference a computing result of the first computing task, and the plurality of virtual devices further comprise at least a fourth virtual device;
the parallel computing framework is configured to distribute the third computing task to the fourth virtual device; and
the fourth virtual device is configured to: subscribe to a task execution status of the first virtual device based on the third computing task; after the first virtual device completes execution of the first computing task, obtain, by the fourth virtual device, the computing result of the first computing task; and execute the third computing task based on the computing result of the first computing task.

25. The apparatus according to claim 24, wherein the fourth virtual device is further configured to:
after the task migration, update subscription to the task execution status of the first virtual device to subscription to a task execution status of the third virtual device.

26. The apparatus according to claim 25, wherein
the task migration module is configured to synchronize a virtual device topology relationship in a routing apparatus of the first virtual device to a routing apparatus of the third virtual device;
the routing apparatus of the third virtual device is configured to: after the task migration, update a virtual device topology relationship in the routing apparatus of the third virtual device based on the task migration; and
a routing apparatus of the fourth virtual device is configured to: after the task migration, update a virtual device topology relationship in the routing apparatus of the fourth virtual device based on the task migration.

27. An electronic apparatus, wherein the electronic apparatus comprises a memory configured to store computer program instructions and a processor configured to execute the computer program instructions, and when the computer program instructions are executed by the processor, the electronic apparatus is triggered to perform the method steps according to any one of claims 1 to 13.

28. A computer-readable storage medium, wherein the computer-readable storage medium stores a computer program, and when the computer program is run on a computer, the computer is enabled to perform the method according to any one of claims 1 to 13.

29. A server cluster, wherein the server cluster comprises a memory configured to store computer program instructions and a processor configured to execute the computer program instructions, and when the computer program instructions are executed by the processor, the server cluster is triggered to perform the method steps according to any one of claims 1 to 13.
